# EUROPÄISCHE PATENTSCHRIFT

(11) **EP 3 867 714 B1**
(45) Veröffentlichungstag und Bekanntmachung des Hinweises auf die Patenterteilung: **18.09.2024**
(21) Anmeldenummer: 19795133.8
(22) Anmeldetag: 18.10.2019
(51) Int. Cl.: G05B 19/4065, B23K 37/04

(54) **BEWERTEN VON WERKSTÜCKLAGEN IN GESCHACHTELTEN ANORDNUNGEN**
EVALUATING WORKPIECE POSITIONS IN STACKED ARRANGEMENTS
ÉVALUATION DE POSITIONS DE PIÈCES DANS DES AGENCEMENTS IMBRIQUÉS

(30) Priorität: 19.10.2018 DE 102018126077
(43) Veröffentlichungstag der Anmeldung: 25.08.2021
(73) Patentinhaber: TRUMPF Werkzeugmaschinen SE + Co. KG, 71254 Ditzingen (DE)
(72) Erfinder: OTTNAD, Jens, 76199 Karlsruhe (DE); KIEFER, Manuel, 74889 Sinsheim (DE); RAHÄUSER, Raphael, 70469 Stuttgart (DE); SELZAM, Daniel, 70197 Stuttgart (DE)
(74) Vertreter: Trumpf Patentabteilung
(86) Internationale Anmeldenummer: PCT/EP2019/078368
(87) Internationale Veröffentlichungsnummer: WO 2020/079221

(56) Entgegenhaltungen:
- EP-A1- 2 029 313
- CN-U- 206 747 802
- US-A1- 2010 064 870
- US-A1- 2012 109 352

## Beschreibung

Die vorliegende Erfindung betrifft Schachtelungen von mit einer Flachbettwerkzeugmaschine zu schneidenden Werkstücken aus einer Rohmaterialtafel, insbesondere ein Verfahren zum Bewerten eines Schachtelungsplans für eine Ansteuerung eines Schneidprozesses einer Flachbettwerkzeugmaschine, z. B. einer Flachbett-Laserschneidmaschine. Ferner betrifft die Erfindung ein Verfahren zum Bewerten einer Werkstücklage in einem Schachtelungsplan.

Eine Schachtelung bezieht sich hierin auf das Positionieren von Werkstücken auf einer Rohmaterialtafel (als Ausgangstafel eines Laserschneidprozesses). In der blechverarbeitenden Industrie ist das Verschachteln von zu schneidenden Werkstücken auf einer Rohmaterialtafel Teil des Produktionsprozesses, wobei das Verschachteln zu einem spezifischen Layout von Schneidlinien führt. Hierin wird das Ergebnis einer Verschachtelung (die Schachtelung) in der Planungs- und Schneidphase auch als Schachtelungsplan bezeichnet, gemäß dem die Werkstücke entlang der Schneidlinien geschnitten werden.

Derartige zweidimensionale (2D-)Schachtelprobleme werden insbesondere bei Flachbett-Laserschneidemaschinen primär hinsichtlich der Minimierung des einzusetzenden Rohmaterials gelöst, da das Rohmaterial in der Regel einen erheblichen Teil der Gesamtkosten ausmacht. Allerdings sind auch weitere Aspekte zu berücksichtigen. So ist beispielsweise bei Flachbett-Laserschneidmaschinen die relative Lage der zu bearbeitenden Teilekonturen zu Auflagestegen (auch einfach als "Stege" bezeichnet) der Maschine oft unbekannt. Deswegen kann es bei Schneidvorgängen über den Stegen zu Qualitätseinbußen an den Teilen sowie zu starkem Stegverschleiß kommen. Aufgrund instabiler Lagerung der Teile auf Stege kann es zusätzlich zu unerwarteten Verkippung der Teile und daraus folgenden Prozessstörungen kommen. So offenbart z. B. US 2012/0109352 A1 ein Verfahren zum Erzeugen von Nesting-Daten unter Vermeidung eines Überlappens eines Schneidpfads mit Lagerungserhebungen, um insbesondere Schäden an der Lagerung zu reduzieren. Des Weiteren offenbart CN 105740953 A eine Werkstückschachtelung, z. B. bei Stanzbearbeitungen, basierend auf einem quantenevolutionären Algorithmus. Ferner offenbaren EP 1 340 584 B1, EP 2 029 313 B1 und EP 2 029 314 B1, eine Kollisionsprüfung zwischen dem Verlauf der Schneidkontur und Auflagespitzen durchzuführen. Abhängig vom Ergebnis werden die Anordnung der Auflagespitzen festgelegt oder Auflagestege verschoben. So offenbart EP 2 029 313 B1 z. B. eine Optimierung einer Werkstückauflage hinsichtlich des Verschleißes von Tragpunktspitzen und einer Gewährleistung einer Gut- und Restteilablage.

In JP H 07299682 A ist offenbart, mit einer Detektionsvorrichtung zu erkennen, ob ein Schneidweg mit einem Auflagestift kollidiert. Ist das der Fall, wird dieser Auflagestift entfernt (abgesenkt). Ferner offenbaren US 9,031,688 B2 und US 8,455,787 B2 die Berechnung einer Kippwahrscheinlichkeit mittels Massenschwerpunkt von Werkstücken und in JP H 09271977 A ist offenbart, an einem Monitor zu prüfen, ob Teile, die frei fallen sollen, auf Auflagespitzen liegen.

"The geometry of nesting problems: A tutorial", by J. A. Bennell et. al., European Journal of Operational Research 184 (2008) 397-415 enthält Informationen zu Schachtelungs- (Nesting) Ansätzen, insbesondere für Nonfit-Polygone.

Einem Aspekt dieser Offenbarung liegt die Aufgabe zugrunde, einen Schachtelungsplan für eine Mehrzahl von zu schneidenden Werkstücken anzugeben, der eine reduzierte Beschädigungsrate an Werkstücken und/oder Auflagestegen aufweist. Einem weiteren Aspekt dieser Offenbarung liegt die Aufgabe zugrunde, einen Schachtelungsplan für eine Mehrzahl von zu schneidenden Werkstücken anzugeben, der eine reduzierte Verkippungsrate und/oder einen verbesserten Butzen-Ausfall aufweist. Unter einer ,Butze` (*en: slug*) wird hierin ein Abfallteil verstanden, das einem aus einem Werkstück oder allgemein der Tafel ausgeschnittenen Innenbereich entspricht.

Zumindest eine dieser Aufgaben wird gelöst durch ein Verfahren zum Bewerten einer Lage eines Teilraums eines Schachtelungsplans nach Anspruch 1, durch Verfahren zur Bestimmung eines Schachtelungsplans nach Anspruch 11 oder 12, durch ein Fertigungsverfahren nach Anspruch 17 und ein Fertigungssystem nach Anspruch 18. Weiterbildungen sind in den Unteransprüchen angegeben.

Ein Aspekt der vorliegenden Offenbarung betrifft ein Verfahren zum Bewerten einer Lage eines Teilraums eines Schachtelungsplans. Der Schachtelungsplan ist für eine Ansteuerung eines Schneidprozesses einer Flachbettwerkzeugmaschine zum Ausschneiden von Werkstücken aus einer Materialtafel vorgesehen und umfasst eine überlappungsfreie Anordnung von den Werkstücken entsprechenden Teilräumen in einem zweidimensionalen Planungsraum sowie eine Anordnung von vorbestimmten Auflageräumen und Auflageumgebungsräumen. Die Auflageräume entsprechen Lagerungsoberflächenbereichen der Materialtafel, die während des Schneidprozesses gelagert sind. Das Verfahren umfasst die Schritte:
Bereitstellen von
   Konturdaten, die eine Schneidkontur angeben, die den Teilraum in der zu bewertenden Lage im Planungsraum begrenzt,
   Positionsdaten, die die Positionen von bei der Bewertung zu berücksichtigenden Räumen im Planungsraum angeben, wobei die Räume eine Gruppe von Auflageräume und eine Gruppe von Auflageumgebungsräume umfassen, und
   Schneidvorgangsdaten, die für mindestens einen Abschnitt der Schneidkontur einen Typ eines Schneidvorgangs angeben;
Ermitteln von kumulierten Konturabschnittslängen unter Verwendung der Positionsdaten, der Konturdaten und der Schneidvorgangsdaten, wobei jede der kumulierten Konturabschnittslängen spezifisch für einen Typ eines Schneidvorgangs und eine Gruppe von Räumen eine kumulierte Länge der Abschnitte der Schneidkontur angibt, die jeweils innerhalb der entsprechenden Gruppe von Räumen liegen;
Berechnen einer Beschädigungsrate für die Schneidkontur in der zu bewertenden Lage durch gewichtetes Kombinieren der Konturabschnittslängen mit Gewichtungsfaktoren, die eine Beschädigungswahrscheinlichkeit in Abhängigkeit von der jeweiligen Gruppe von Räumen und vom jeweiligen Typ des Schneidvorgangs definieren; und
Bestimmen eines Bewertungswerts für die zu bewertende Lage des Teilraums unter Verwendung der berechneten Beschädigungsrate der Schneidkontur.

Ein weiterer Aspekt betrifft ein Verfahren zur Bestimmung eines hinsichtlich eines Schneidprozesses, insbesondere hinsichtlich Beschädigungen und Qualität, verbesserten Schachtelungsplans von Teilräumen, bei dem Bewertungswerte für Lagen der Teilräume im Schachtelungsplan nach dem zuvor beschriebenen Verfahren berechnet werden.

In einem weiteren Aspekt umfasst ein Verfahren zur Bestimmung eines Schachtelungsplans die folgenden Schritte:
Ablegen der Materialtafel auf den Stegspitzen einer Palette der Flachbettwerkzeugmaschine und Bestimmen von Lagedaten der Materialtafel bezüglich der Palette;
Erfassen von Positionen der Auflagestege und/oder der Stegspitzen bezüglich der Palette und/oder der Materialtafel, um Positionsdaten von bei der Bewertung zu berücksichtigenden Räumen im Planungsraum bereitzustellen, wobei
   Bereiche über Stegspitzen Auflageräumen zugeordnet werden, die Lagerungsoberflächenbereichen der Materialtafel entsprechen,
   Bereiche über Stegvertiefungen Auflageüberlagerungsräumen zugeordnet werden, wobei die Stegvertiefungen optional weiter untergliederbar sind in Bereiche von Stegspitzenflanken und Stegspitzensenken denen nahe und ferner Auflageüberlagerungsräume zugeordnet werden, und
   Randbereiche, die sich seitlich an einen Auflagesteg anschließen und neben einem Auflagestegentlang der Stegspitze und optional entlang der Stegvertiefung erstrecken, Auflagefreiräumen zugeordnet werden;
Bereitstellen von Anordnungsdaten bezüglich der Anordnung des Planungsraums auf der Materialtafel, insbesondere dem Koordinatensystem der Materialtafel oder der Palette; und
Bestimmung des Schachtelungsplans durch Positionieren der Teilräume in Lagen, die nach dem zuvor beschriebenen Verfahren bewertet werden.

In einem weiteren Aspekt umfasst ein Fertigungsverfahren zum Ausschneiden von Werkstücken mit einer Flachbettwerkzeugmaschine gemäß werkstückspezifischen Schneidkonturen aus einer Materialtafel die Schritte:
Durchführen des zuvor beschriebenen Verfahrens in Echtzeit während des Betriebs der Flachbettwerkzeugmaschine, wobei die Berechnungen zur Bestimmung des verbesserten Schachtelungsplans von einem lokalen und/oder Cloud-basierten Fertigungssteuerungssystem durchgeführt wird; und
Durchführen des Schneidvorgangs basierend auf dem verbesserten Schachtelungsplan.

In einem weiteren Aspekt umfasst ein Fertigungssystem eine Flachbettwerkzeugmaschine zum Ausschneiden von Werkstücken gemäß werkstückspezifischen Schneidkonturen aus einer Materialtafel und ein lokales und/oder Cloud-basiertes Fertigungssteuerungssystem zum Durchführen des zuvor beschriebenen Verfahrens in Echtzeit während des Betriebs der Flachbettwerkzeugmaschine, um dieser einen hinsichtlich eines Schneidprozesses der Flachbettwerkzeugmaschine verbesserten Schachtelungsplan bereitzustellen.

Weitere Aspekte umfassen ein Computerprogramm (oder ein Computerprogrammprodukt), und ein computerlesbares Medium, auf dem ein entsprechendes Computerprogramm gespeichert ist. Das Computerprogramm/Computerprogrammprodukt umfasst Befehle, die bei der Ausführung des Programms durch einen Computer, insbesondere durch eine computerimplementierte Steuerungseinheit zum Betreiben einer Flachbettwerkzeugmaschine oder einer Planungseinheit, den Computer/die Steuerungseinheit dazu veranlassen, die hierin beschriebenen Verfahren zur Erzeugung oder Bewertung eines (schneidprozessorientierten) Schachtelungsplans bzw. der Bewertung einer Werkstücklage in einem Schachtelungsplans auszuführen/zu veranlassen.

Das Computerprogramm/ Computerprogrammprodukt und das computerlesbares Medium sind entsprechend zum Ausführen einer der zuvor genannten Verfahrensschritte vorgesehen, insbesondere all derjenigen Verfahrensschritte, die auf Grund ihres Gegenstands durch entsprechende Computerprogrammbefehle und/oder Routinen ausgeführt werden können. Das Computerprogramm kann auf einem nicht-flüchtigen Speicher, der insbesondere als Teil einer Steuerungseinheit zum Betreiben einer Flachbettwerkzeugmaschine oder einer Planungseinheit verwendet wird, abgelegt sein.

In einigen Ausführungsformen weist die Flachbettwerkzeugmaschine zur Lagerung der Materialtafel eine Palette mit einer Mehrzahl von Auflagestegen auf, die jeweils eine Mehrzahl von Stegspitzen aufweisen. Die Auflageumgebungsräume können Auflageüberlagerungsräume, die Bereichen der Materialtafel entsprechen, die während des Schneidprozesses über einem Auflagesteg liegen, und Auflagefreiräume, die Bereichen der Materialtafel entsprechen, die nicht über einem Auflagesteg beim Schneidprozess liegen, umfassen. Das Verfahren kann dann ferner die folgenden Schritte aufweisen:
Untergliedern der Schneidkontur in Abschnitte, die in einem Auflageüberlagerungsraum liegen, und Abschnitte, die in einem Auflagefreiraum liegen;
Ermitteln einer Konturabschnittslänge jeweils für die Auflageüberlagerungsräume und die Auflagefreiräume unter Verwendung der Positionsdaten, der Konturdaten und der Schneidvorgangsdaten; und
Einbeziehen der Konturabschnittslänge für die Auflageüberlagerungsräume und die Auflagefreiräume in die Berechnung der Beschädigungsrate für die Schneidkontur mit entsprechenden Gewichtungsfaktoren.

In einigen Ausführungsformen kann der Schritt des Bereitstellens der Positionsdaten umfassen Positionen von Auflagestegen und/oder von Stegspitzen einer Palette, die zur Verwendung mit der Flachbettwerkzeugmaschine vorgesehen ist und die einen Lagerungsbereich bereitstellt, in dem die Materialtafel gelagert werden kann, zu erfassen. Dabei können Bereiche über Stegspitzen den Auflageräumen und Bereiche über Stegvertiefungen Auflageüberlagerungsräumen zugeordnet werden. Die Stegvertiefungen können optional weiter in Bereiche von Stegspitzenflanken und Stegspitzensenken untergliedert werden, denen entsprechend nahe und ferner Auflageüberlagerungsräume zugeordnet werden. Ferner können Randbereiche, die sich seitlich an einen Auflagesteg anschließen und neben einem Auflagesteg entlang der Stegspitze und optional entlang der Stegvertiefung erstrecken, Auflagefreiräumen zugeordnet werden.

Das Verfahren kann ferner ein Ablegen einer Materialtafel auf der Palette und ein Bestimmen von Lagedaten der Materialtafel bezüglich der Palette umfassen, wobei aus einer räumlichen Anordnung der Materialtafel der Planungsraum abgeleitet wird, in dem die Auflageräumen, Auflageüberlagerungsräume und die Auflagefreiräume definiert sind.

In einigen Weiterbildungen können den Auflageräumen mithilfe der Positionsdaten Abschnitte der Schneidkontur oder Positionen entlang der Schneidkontur den Gruppen von Räumen zugeordnet werden und der Bewertungswert der zu bewertenden Lage des Teilraums kann in Abhängigkeit des Ausmaßes der zugeordneten Abschnitte der Schneidkontur oder der Positionen entlang der Schneidkontur, insbesondere in Abhängigkeit von der kumulierten Konturabschnittslänge für den Auflageraum, bestimmt werden. Weitere Lagerungsräume können im Planungsraum bereitgestellt werden und diesen mithilfe der Positionsdaten Abschnitte der Schneidkontur oder Positionen entlang der Schneidkontur zur Bewertung der zu bewertenden Lage des Teilraums zugeordnet werden. Kumulierten Konturabschnittslängen können für die Lagerungsräume in Abhängigkeit des Ausmaßes der den weiteren Lagerungsräumen zugeordneten Abschnitte der Schneidkontur oder der Positionen entlang der Schneidkontur bestimmt werden. Die kumulierten Konturabschnittslängen der Auflageräume und der weiteren Lagerungsräume mit Gewichtungen können kombiniert werden, um den Bewertungswert für die zu bewertende Lage des Teilraums zu gewinnen.

Das Verfahren kann ferner ein Bereitstellen von den Schneidkonturen zugeordnete Anschnittdaten umfassen, die einen Einstechvorgang und optional einen Anfahrvorgang für die Schneidkontur angeben, sowie von Schneidvorgangsdaten für den Einstechvorgang und optional den Anfahrvorgang. Ferner kann das Verfahren ein Ermitteln der Einstichanzahl (als Wert einer Konturabschnittslänge, die dem Einstechvorgang entspricht) und optional einer Anfahrabschnittslänge jeweils für die Gruppen von Räumen unter Verwendung der Positionsdaten, der Anschnittdaten und der Schneidvorgangsdaten, und ein Einbeziehen der Einstichanzahlen und optional der Anfahrabschnittslänge in die Berechnung der Beschädigungsrate für die Schneidkontur mit entsprechenden Gewichtungsfaktoren umfassen.

In einigen Weiterbildungen kann eine Teilequalitätsauswertung durchgeführt werden, die in den Bewertungswert für die zu bewertende Lage des Teilraums einfließt und die von der Konturabschnittslänge für die Auflageräume abhängt. In einigen Weiterbildungen kann ferner eine Kippauswertung durchgeführt werden, die in den Bewertungswert für die zu bewertende Lage des Teilraums einfließt und die eine Berechnung von Abständen zwischen einem Schwerpunkt des Teilraums und Auflageräumen, die mit dem Teilraum überlappen, umfasst.

Allgemein kann ein Teilraum eine Außenkontur und eine geschlossenen Innenkontur, die innerhalb der Außenkontur liegt, aufweisen. Entsprechend kann ferner eine Überlappungsauswertung für die Innenkontur durchgeführt werden, die in den Bewertungswert für die zu bewertende Lage des Teilraums einfließt und die eine Berechnung einer Überlappung der Innenkontur mit Auflageräumen und optional mit Auflageüberlagerungsräumen umfasst.

Allgemein kann das Positionieren der Teilräume in Lagen erfolgt, deren Positionen und/oder Ausrichtungen im Planungsraum sich in vorbestimmten Variationsbereichen unterscheiden. Teilräume können in zu bewertende Lagen positioniert werden, indem sie im Planungsraum verschoben und/oder gedreht werden, indem die Anordnung des Planungsraums auf der Materialtafel, insbesondere im dem Koordinatensystem der Materialtafel oder der Palette, variiert wird, indem Lagedaten der Materialtafel bezüglich der Palette variiert werden, indem eine Einstichposition eines Einstechvorgangs und/oder eine Anfahrschneidlinie eines Anfahrvorgangs für mindestens einen Teilraum variiert wird und/oder Positionen von zwei Teilräumen im Planungsraum ausgetauscht werden.

Allgemein können die Gewichtungsfaktoren von einem Energieeintragswert abhängen, der bei einem Schneidprozess gemäß dem Schneidplan in einen Auflagesteg im Bereich der Stegspitzen erfolgt. Insbesondere kann ein Gewichtungsfaktor für einen Schneidvorgang in einem Raum über einer Stegspitze maximal sein und es können geringere Gewichtungsfaktoren jeweils für einen Schneidvorgang über einer Stegspitzenflanke, für einen Schneidvorgang über einer Stegspitzensenke und für einen Schneidvorgang im Randbereich vorgesehen werden.

Die hierein beschriebenen Konzepte können vorteilhaft hinsichtlich eines verringerten Verschleißes der Auflagestege, einer Erhöhung der Teilequalität, einer Reduzierung von Ausschussteilen und kürzeren Schnittzeiten sein. Ferner kann eine erhöhte Prozesssicherheit erreicht werden, die von einem verringerten Wartungsaufwand begleitet wird. Allgemein können durch die erreichte Schachtelung die Kosten des Schneidprozesses reduziert oder sogar minimiert werden.

Vorteile der Erfindung können umfassen:
- eine Verschleißminimierung der Auflagestege, da das Einstechen über Auflagestegen, insbesondere über Stegspitzen, vermieden werden kann und Schneidkonturabschnitte reduziert werden können, die über und entlang von Auflagestegen verlaufen.
- eine Produktivitätssteigerung aufgrund Reduktion oder Vermeidung von Einstichvorgängen über Stegspitzen, da über Stegspitzen eine längere Einstechdauer erforderlich sein kann oder ein Abbrechen des Einstichvorgangs notwendig werden kann.
- ein Prognosemodell zur voraussichtlichen Standzeit von Auflagestegen möglich wird.
- eine skalierbare Umsetzung eines Online-Verbesserungsvorgangs von Schachtelungsvorgängen, wobei Rechenleistung für z. B. Online-Berechnungen über Cloud-Dienst zur Verfügung gestellt werden können.
- eine automatische Erkennung der Stegbelegung einer beliebigen Bestückung von Stegleisten.
- eine Reduktion von kippenden Teilen und von entsprechenden Prozessstörungen.
- ein robustes und aussagekräftiges Modell zur Verkippungsabschätzung durch Einbezug von Wissen über relative Lagen zwischen Stegspitzen und Werkstücken.
- optional eine zuverlässigere automatische Trennung von Bauteil und Butzen.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische räumliche Darstellung einer Flachbettwerkzeugmaschine,
- Fig. 2: eine schematische Darstellung eines Schachtelungsplans,
- Fig. 3: ein Flussdiagramm eines Verfahrens zur Erzeugung eines Schachtelungsplans für eine Ansteuerung eines Schneidprozesses einer Flachbettwerkzeugmaschine,
- Fig. 4A-4C: schematische Darstellungen zur Verdeutlichung von Korrekturmöglichkeiten einer Werkzeuglage in einem Schachtelungsplan,
- Fig. 5: ein Flussdiagramm eines Verfahrens zur Erzeugung eines schneidprozessorientierten Schachtelungsplans,
- Fig. 6: eine schematische Darstellung zur Verdeutlichung der Berücksichtigung von Auflageräumen,
- Fig. 7: eine schematische Darstellung eines Auflagestegs,
- Fig. 8: eine schematische Darstellung einer Verschiebung eines Teilraums im Planungsraum zur Vermeidung des Überlappens mit Lagerungsräumen,
- Fig. 9: ein Flussdiagramm eines Verfahrens zur Bewertung einer Lage eines Teilraums unter Einbezug von Positionsdaten von Lagerungsräumen,
- Fig. 10: eine Skizze zur Verdeutlichung der gewichteten Berechnung einer Beschädigungsbewertung,
- Fig. 11A-11B: schematische Diagramme zur Verdeutlichung der Verbesserung einer Beschädigungsbewertung,
- Fig. 12: eine schematische Darstellung zur Verdeutlichung der Berücksichtigung einer Verkippung eines Werkstücks,
- Fig. 13: eine schematische Darstellung zur Verdeutlichung der Berücksichtigung von Innenkonturen.

Beim Laserschneiden können Werkstücke so geschachtelt werden, dass eine möglichst hohe Materialausnutzung erreicht wird und entsprechend die Menge an Verlustmaterial gering wird.

Hierin beschriebene Konzepte basieren zum Teil auf der Erkenntnis, dass es in Abhängigkeit von der Lage der Werkstücke auf der Palette beispielsweise zu einem ermittelbaren Verschleiß an Auflagestegen, beispielsweise beim Einstechen und Schneiden, kommen kann. Ferner wurde erkannt, dass Schachtelungen hinsichtlich Verschweißen bzw. Wegfliegen von Butzen, Verkippung von Teilen und Kollisionen eines Schneidkopfes mit Schnittgut in der Planungsphase bewertet werden können. Die Erfinder haben erkannt, dass sich zumindest einige dieser mit dem Schneidprozess verbundenen Einschränkungen auf die Relativposition des Rohblechs (und damit der auf dem Rohblech verteilten Schneidlinien) in Bezug auf die Auflagepunkte der Auflagestege beziehen.

Die hierein beschriebenen Konzepte können es erlauben, auf vorgegebene Auflagestegkonfigurationen zu reagieren und so beschädigungsarme und verlustmaterialarme Schachtelungen zu erzeugen.

Den hierin offenbarten Konzepten liegt zugrunde, dass eine relative Lage von erzeugten Werkstücken zu Auflagestegen über die Erfassung der Stegpositionen sowie der Positionen der Stegspitzen durch vorhandene Sensorik für die Schachtelungsverfahren bereitgestellt werden können. Mit dem Wissen über die (zu erwartende) Lagen der zu erzeugenden Werkstücke auf der Materialtafel können die Schnittmengen zwischen Schneidkonturen und Stegen in einem Planungsraum ermittelt werden. So können Stegverschleiß und Teilequalität abgeschätzt werden und optional zusätzlich ein mögliches Verkippen der Werkstücke abgeschätzt werden. Aufbauend auf diesen Informationen können die Lagen der zu erzeugenden Werkstücke so angepasst werden, dass die geschilderten Probleme reduziert werden.

Ferner wurde erkannt, dass neben der überschneidungsbedingten Beschädigung der Verschleiß anhand weiterer Parameter, z. B. der Streckenenergie, bewertet werden kann. Ebenso kann das Risiko von Verschmutzungen von Werkstücken aufgrund von Schneidlinienverläufen über den Stegen schon vor Schneidbeginn erkannt werden.

Mit Streckenenergie ist in diesem Dokument diejenige Energie gemeint, die über einer vorgegebenen Strecke an ein Material abgegeben wird. Die Streckenenergie bzgl. einer Materialtafel ist demnach die Energie, die über eine vorgegebene Strecke in die Materialtafel eingebracht wird. Die Streckenenergie bzgl. eines Auflagestegs ist demnach die Energie, die über eine vorgegebene Strecke in den Auflagesteg eingebracht wird. Die Streckenenergie hängt ab von der Laserleistung, Vorschubgeschwindigkeit, Spektrum und Fokussierung des Lasers, Eigenschaften des zu schneidenden Werkstücks, Bleches, insbesondere Material, Dicke, Absorptionseigenschaften, Streueigenschaften, Abstand des Werkstücks bzw. Auflagestegs vom Laseremitter und vielen weiteren Faktoren. Ferner kann die Streckenenergie, die in einen Auflagesteg eingebracht wird, von der Länge eines Abschnitts der Schneidlinie abhängen, der in einem entsprechenden Bereich (z. B. den Auflagebereich der Materialtafel auf dem Auflagesteg) verläuft; dies entspricht im Planungsraum den jeweiligen Konturabschnittslängen in den zugeordneten Räumen.

Die hierin vorgeschlagenen Bewertungsverfahren können es erlauben, derartige Probleme durch geeignete Strategien bei der Schachtelung zu beheben. Eine Möglichkeit dazu ist ein gezieltes Verschieben oder ein erneutes Platzieren von Werkstücken auf dem Blech bzw. im Planungsraum. Dabei sind die Strategien skalierbar; d. h., eine Verschiebung und/oder Rotation der gesamten Materialtafel bis hin zur Neuplatzierung (Neu-Schachtelung) aller Werkstücke mit verbesserten Lagen hinsichtlich Kriterien wie Schneidkontur auf Stegspitze, Schneidkontur über Steg, Einstechen über Steg, Stabilitätskriterien zur Vermeidung von Verkippung, Platzierung von Butzen ohne Auflage für ein Herausfallen nach Freischnitt sind mögliche Maßnahmen. Damit kann auf Basis geeigneter Algorithmen eine Beschädigungsrate, eine Verkippungswahrscheinlichkeit oder eine Butzen-Fallwahrscheinlichkeit abgeschätzt, bewertet und nach gewünschter Metrik verbessert werden.

Eine (Neu-) Schachtelung kann beispielsweise mit Verfahren erfolgen, wie sie in der deutschen Patentanmeldung mit der Nummer 10 2018 124 146 mit dem Titel "SCHACHTELN VON WERKSTÜCKEN FÜR SCHNEIDPROZESSE EINER FLACHBETTWERKZEUGMASCHINE" der Anmelderin mit Anmeldetag 26. September 2018 und Anmeldenummer 10 2018 124 146 offenbart sind.

In einer weiteren Ausprägung kann durch eine Abschätzung, Berechnung, Ermittlung und/oder Aufzeichnung der Streckenenergie über jedem Steg und/oder jeder Stegspitze eine Zustands-Prognose der Auflagestege gewonnen werden. Dadurch kann auch die zuvor beschriebene Lösung zur Interpolation verbessert werden, da kumulierte Werte der Streckenenergie als Belastung der Stege und deren Abnutzungsgrad berücksichtigt werden können. Beispielsweise kann ab einer bestimmten Abnutzung der Stegspitze diese als Stabilitätskriterium bei der Verkippungsberechnung nicht mehr berücksichtigt werden, sodass z. B. eine Robustheit der Verkippungsberechnung weiter erhöht werden kann.

Die hierin vorgeschlagenen Konzepte gehen unter anderem davon aus, dass die Positionen der zu berücksichtigenden Stützpunkte (Auflagebereiche der Materialtafel, insbesondere Lagerungsoberflächenbereiche der Unterseite der Materialtafel) bei der Erzeugung eines Schachtelungsplans bekannt sind oder zumindest derart für einen Schneidprozess einstellbar sind, dass sie vorbestimmten und der Planung zugrunde liegenden Positionen angepasst werden können.

Schachtelungsverfahren, die eine Schachtelung von Bauteilen auf einer Palette vorschlagen, können auf evolutionären Algorithmen basieren. Auch die hierin vorgeschlagenen prozessorientierten Schachtelungsverfahren können als evolutionäre Algorithmen ausgeführt werden. Dabei fließen in die Bewertung einer Lage eines Teilraums hinsichtlich einer Beschädigung relevante Eigenschaften eines Schneidvorgangs ein. So können z. B. die Lage der Teile relativ zu Auflagestegen einer Palette und die Lage von Einstichpunkten in die Bewertung eingehen.

Die hierin vorgeschlagenen Verfahren können derart in den Schneidprozess eingebunden werden, dass benötigte Fertigungsprozessdaten eingelesen oder eingangs gewonnen werden, wenn z. B. eine Materialtafel auf einer Palette abgelegt wird. Die relativen Positionen der Auflagebereiche relativ zur Materialtafel können beispielsweise während des Betriebs bestimmt werden. Dies kann z. B. mit einer Sensorik der Flachbettwerkzeugmaschine, insbesondere einer kapazitiven Abstandssensorik zur Abstandsdetektion zwischen der Düse der Flachbettwerkzeugmaschine und der Materialtafel erfolgen. Allgemein kann zumindest eine Untergruppe der Auflagestege und/oder der Stegspitzen erfasst werden und optional können die Positionen nichterfasster Auflagestege und/oder Stegspitzen durch Interpolation berechnet werden. Weitere Messverfahren basieren z. B. auf einer optischen Sensorik, die auf mindestens einem der folgenden Verfahren basiert: Bildverarbeitungsverfahren basierend auf einer Flächenbildaufnahme, einem Laserlichtschnitt-Verfahren, einem Streifenlichtprojektions-Verfahren, einer Lichtfeldkamera, einer 3D-Kamera, z.B. einer Time-of-flight- (TOF-) Kamera, insbesondere zur Distanz- und/oder Tiefenerfassung von Stegvertiefungen, der Zustandserfassung der geometrischen Form für eine begleitende Beurteilung von Verschleiß eines Auflagestegs und/oder einer Stegspitze, und/oder auf einer Ultraschallsensorik, welche Ultraschallsensoren insbesondere an einem Schneidkopf der Flachbettwerkzeugmaschine einsetzt.

Des Weiteren können die hierin vorgeschlagenen Verfahren auf festgelegten/vorbestimmten relativen Positionen der Auflagebereiche relativ zur Planungstafel basieren, wobei die Erstellung der Schachtelungspläne und insbesondere die die Positionsdaten einbeziehenden Bewertungen basierend auf den festgelegten/vorbestimmten relativen Positionen vorgenommen werden. Für den Fertigungsprozess ist es dann erforderlich, die festgelegten/vorbestimmten relativen Positionen der Auflagebereiche relativ zu auf die Materialtafel übertragenen Schachtelungsplänen sicherzustellen. D. h., es können z. B. die Positionen der Auflagebereiche hinsichtlich einer Materialtafel erfasst werden und der Schachtelungsplan (oder der Planungsraum) entsprechend der den festgelegten/vorbestimmten relativen Positionen der Auflagebereiche auf der Materialtafel ausgerichtet werden.

In den zuvor angesprochenen Ansätzen sind somit jeweils die relativen Positionen bekannt und stellen Eingangsparameter dar, die ihrerseits einstellbar sein können und entsprechend einen weiteren Freiheitsgrad in der prozessorientieren Schachtelung darstellen.

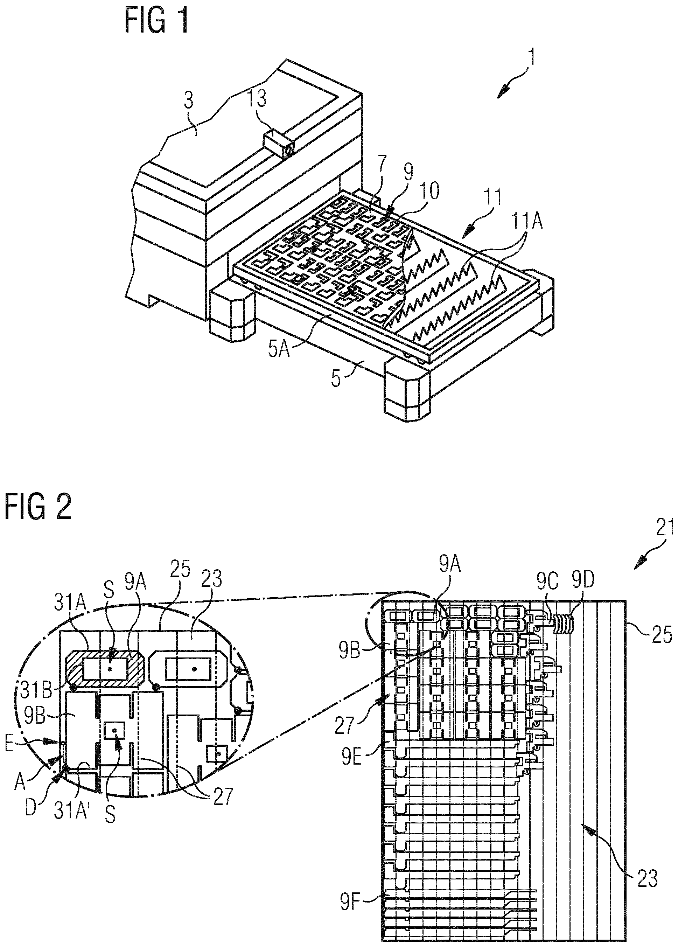

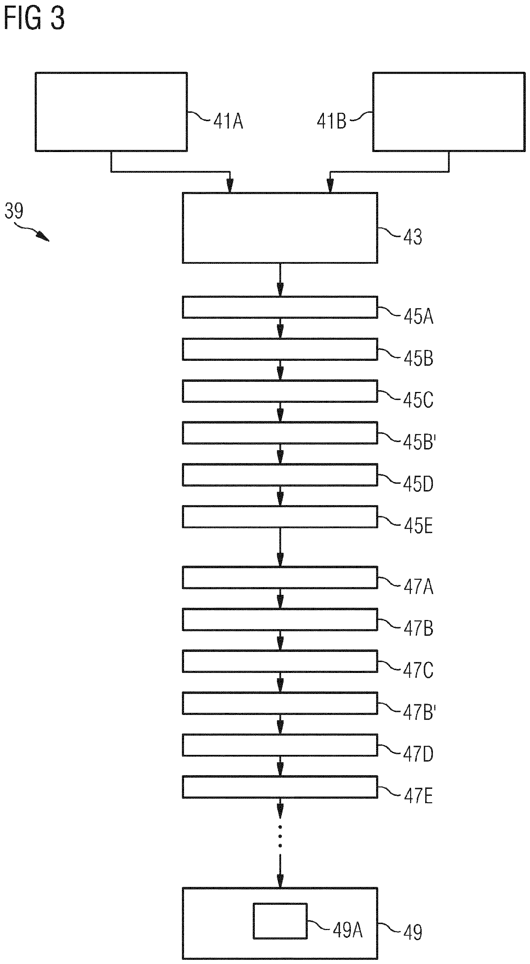

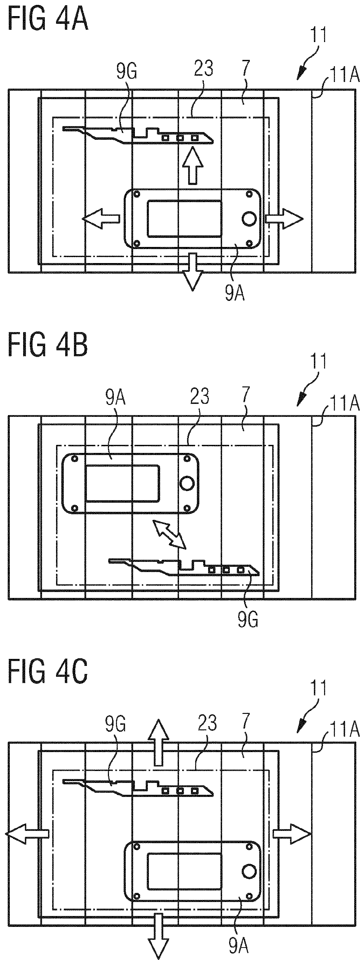

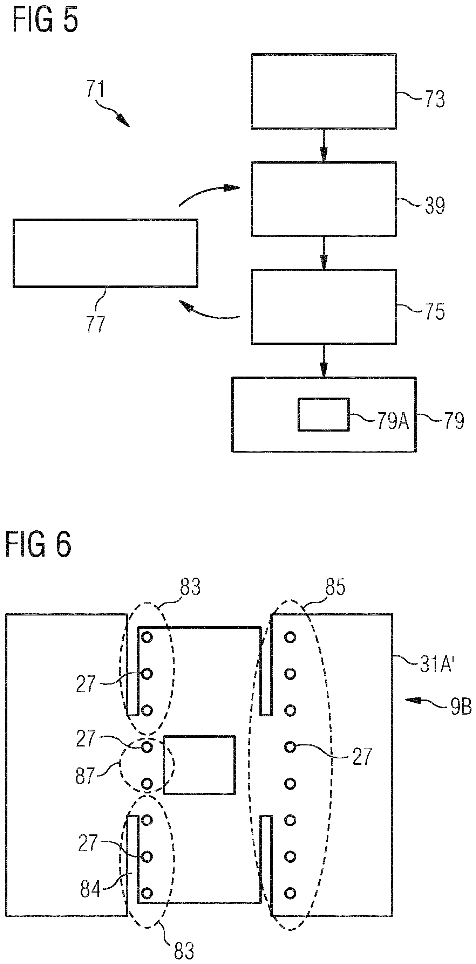

Im Folgenden wird zuerst die Erzeugung von Werkstücken mit einer Flachbett-Laserschneidemaschine erläutert und diese in Bezug zu Schachtelungsplänen gesetzt (Figuren 1 und 2). Ein Verfahren zur Erzeugung eines Schachtelungsplans wird anschließend in Verbindung mit Fig. 3 beschrieben, wobei die Figuren 4A bis 4C beispielhaft Korrekturmöglichkeiten für Lagen von Teilräumen bezüglich Positionsdaten, die eine Steganordnung repräsentieren skizzieren. Ein Verfahren zur Erzeugung eines Schachtelungsplans mit einem evolutionären Algorithmus wird in Verbindung mit Fig. 5 erläutert. Abschließend wird in Verbindung mit den Figuren 6 bis 13 ein beispielhafter Bewertungsansatz eines Schachtelungsplans hinsichtlich des Einflusses von Auflagestegen auf den Schneidprozess einer Materialtafel, insbesondere von Auflageräumen im Planungsraum, dargestellt.

Eine in Fig. 1 gezeigte schematische Flachbettwerkzeugmaschine 1 umfasst ein Hauptgehäuse 3, in dem der Schneidprozess mit einem Laserstrahl durchgeführt wird. Insbesondere wird ein Fokus des Laserstrahls von einem Steuerungssystem entlang vorgegebener in einem Bearbeitungsbereich angeordneten Schneidlinien über ein Material geführt, um aus diesem Werkstücke mit spezifischen Formen aus z. B. einem sich im Wesentlichen zweidimensional erstreckenden Blech zu schneiden.

Ferner umfasst die Flachbettwerkzeugmaschine 1 einen Palettenwechsler 5. Der Palettenwechsler 5 ist dazu ausgebildet, eine oder mehrere Paletten während der Fertigung zu positionieren. Auf einer Palette 5A kann eine zu schneidende Materialtafel (als Roh- oder Ausgangsmaterial) gelagert und in das Hauptgehäuse 3 für den Schneidvorgang eingebracht werden. Nach dem vollendeten Schneidvorgang kann die Palette 5A, wie in Fig. 1 gezeigt, mit einer geschnittenen Materialtafel 7 aus dem Hauptgehäuse 3 gefahren werden, sodass die geschnittenen Werkstücke 9 absortiert werden können.

Im Hauptgehäuse 3 kann der Laserbearbeitungskopf, aus dem der Laserstrahl austritt, im Bearbeitungsbereich frei positioniert werden, so dass der Laserstrahl im Wesentlichen entlang beliebiger zweidimensionaler Schneidlinien über die zu schneidende Materialtafel geführt werden kann. Beim Laserschneiden erwärmt der Laserstrahl das Metall entlang der Schneidlinie, bis es schmilzt. Ein Gasstrahl, meist Stickstoff oder Sauerstoff, tritt üblicherweise im Bereich des Laserstrahls aus dem Laserbearbeitungskopf aus und drückt das geschmolzene Material nach unten und aus dem sich ausbildenden Spalt. Die Materialtafel 7 wird somit beim Schneiden vom Laserstrahl vollständig durchtrennt.

Zum Ausschneiden eines Werkstücks 9 wird der Laserstrahl entlang einer Schneidlinie 10 bewegt. Diese beginnt üblicherweise an einem Einstichpunkt E, der außerhalb des Werkstücks 9 liegen kann, und nähert sich dann der Kontur des Werkstücks 9, insbesondere in einem Bogen (dem sogenannten Anschnitt A) an. Der Punkt, an dem die Schneidlinie zuerst die Kontur des Werkstücks berührt, ist der Punkt, an dem der Schnitt später abgeschlossen wird (ein kontinuierlicher Schneidvorgang vorausgesetzt). Dieser Punkt wird als Druckpunkt D bezeichnet, da er der Punkt ist, an dem der austretende Gasstrahl einen Druck auf das geschnittene Teil ausübt und zwar zu dem Zeitpunkt, an dem es sich erstmals frei bewegen kann. Insbesondere bei dünnen Materialtafeln kann der Gasdruck zu einem Verkippen des Werkstücks führen, so dass potentiell ein Teil des Werkstücks aus der Ebene der Metalltafel herausragen und z. B. mit dem Schneidkopf kollidieren kann.

Im gezeigten Ausführungsbeispiel weist die Palette 5A mehrere quer zur Einschubrichtung verlaufende und parallel zueinander ausgerichtete Auflagestege 11 auf. Beispielhaft haben die Auflagestege 11 einen Abstand von 20 mm bis 100 mm, z. B. 60 mm, zueinander. Die Auflagestege 11 bilden Auflagebereiche 11A aus, auf denen die Materialtafel 7 abgelegt wird. Die Auflagebereiche 11A bilden üblicherweise Gitterpunkte, die entlang der Auflagestege 11 einen Abstand von 5 mm bis 50 mm, z. B. 15 mm, aufweisen können, wobei ein Auflagesteg eine Dicke von 1 mm bis 5 mm, z. B. 2 mm, aufweisen kann. Die Auflagebereiche 11A bilden somit ein Raster von Bereichen, die den Schneidvorgang der auf ihnen liegenden Materialtafel 7 beeinflussen können. Die den Schneidvorgang beeinflussenden Bereiche der Auflagestege können sich überdies auf Bereiche erstrecken, die sich direkt an die im Kontakt mit der Materialtafel stehenden Auflagebereiche anschließen, z. B. die zu den Auflagebereichen 11A führenden Flanken der Auflagestege 11.

Fig. 1 zeigt ferner eine Kamera 13, die z. B. am Hauptgehäuse 3 angeordnet ist. Die Kamera 13 kann u. a. für eine Bilderfassung der Palette 5A, der Auflagestege 11 und Auflagebereiche 11A sowie der relativen Lage der Materialtafel 7 bezüglich der Palette 5A (und evtl. der Auflagestege 11 und Auflagebereiche 11A) ausgebildet sein und steht in Verbindung mit einer Bildauswerteeinheit des Steuerungssystems der Flachbettwerkzeugmaschine 1.

Die Flachbettwerkzeugmaschine 1 kann ein lokales und/oder Cloud-basiertes Fertigungssteuerungssystem zum Durchführen der hierin beschriebenen Verfahren zum Bewerten einer Lage eines Teilraums in einem Planungsraum und/oder der hierin beschriebenen Verfahren zum Erstellen von Schachtelungsplänen aufweisen. Mit diesem können in Echtzeit während des Betriebs der Flachbettwerkzeugmaschine 1 die Bewertungen und Verschachtelungen erzeugt werden. Dadurch kann der Flachbettwerkzeugmaschine beispielsweise ein, insbesondere schon kurz nach dem Ablegen der Materialtafel hinsichtlich eines Schneidprozesses verbesserter Schachtelungsplan bereitgestellt werden.

Mit Cloud-basiert ist in diesem Dokument eine, insbesondere örtlich entfernte, vorzugsweise anonymisierte, Speicher- und/oder Datenverarbeitungsvorrichtung gemeint, in der Daten und Bewertungen von mehr als einem, vorteilhafterweise von mehreren hundert oder mehreren tausend unterschiedlichen Nutzern gespeichert und/oder rechentechnisch verarbeitet werden können. Hierdurch können verschiedene Nutzer unabhängig vom Fertigungsstandort zur Optimierung des Verfahrens beitragen. Es wurde erkannt, dass die beschriebenen Verfahren durchschlagende Erfolge erst erzielen, wenn mehrere hundert, insbesondere mehrere tausend, insbesondere zehntausend, insbesondere mehrere hunderttausend Nutzerbewertungen ausgelesen wurden. Eine solche Datenmenge ist für eine einzelne Fertigungsstätte oftmals in einem Jahr nicht erreichbar. Demnach wäre das Verfahren vermutlich für eine solche Fertigungsstätte unter Umständen uninteressant geblieben.

In einem Fertigungssteuerungs-System (en: manufacturing executing system, MES) können mehrere Bearbeitungspläne abgelegt sein. In den Bearbeitungsplänen können jeweils Auftragsinformationen zur industriellen Bearbeitung von Werkstücken und/oder Werkstückverbunden hinterlegt sein. Die Bearbeitungspläne können neben dem Laserschneiden weitere Bearbeitungs-Schritte oder Prozesse, wie z.B. Formen, Biegen, Stanzen, Erhitzen, Schweißen, Verbinden, Oberflächenbearbeitung etc. enthalten, die das Werkstück parallel oder sequentiell durchlaufen kann. So können die Werkstücke mehrere Bearbeitungsschritte koordiniert durchlaufen und die Schnittkantenqualität kann schon in der gesamten Fertigungssteuerung eingestellt und verbessert werden. Das MES kann dazu ausgelegt sein, dass Bearbeitungspläne der zu produzierenden Werkstücke in ihm angelegt und mit ihm abgearbeitet werden können. Dabei kann das MES ferner dazu ausgelegt sein, den Status der Werkstücke darzustellen. Das bedeutet, dass das MES dazu ausgelegt sein kann, sowohl die Reihenfolge der Bearbeitungsschritte als auch die bereits durchgeführten Bearbeitungsschritte auszugeben. Vorteilhafterweise kann das MES zusätzlich dazu ausgelegt sein, einzelne Bearbeitungspläne den Werkzeugmaschinen zuzuordnen. Vorteilhafterweise kann das MES ferner dazu ausgelegt sein, dass jederzeit manuell oder automatisiert in die Bearbeitungsschritte eines Bearbeitungsplans eingegriffen werden kann. Das hat den Vorteil, dass während des Fertigungsablaufs von mehreren unterschiedlichen Bearbeitungsplänen sehr flexibel auf unterschiedliche, insbesondere unerwartet auftretende Ereignisse reagiert werden kann. Diese Ereignisse können z. B. sein: Veränderung der Priorität von Bearbeitungsplänen oder Produktionsaufträgen, ein neuer hoch priorisierter Produktionsauftrag, Stornierung eines Produktionsauftrags, fehlendes Material, z. B. bei Falsch-Lieferung, Ausfall einer Maschine, fehlendes Fachpersonal, Unfälle, Feststellen von fehlerhafter Qualität eines Fertigungsschritts etc. Das MES kann lokal in der Fertigungsstätte und/oder zumindest teilweise Cloud-basiert örtlich entfernt installiert sein.

Man erkennt, dass aufgrund der Lagerung in lokalisierten Bereichen prozessbedingte Risiken die Prozesssicherheit beeinflussen können. Beispielsweise können Schneidwege über Stege oder das Kippen eines Werkstücks 9 zu Schäden am Auflagesteg 11 und/oder am Werkstück 9 und/oder an einem Schneidkopf führen und so das Risiko von Ausschuss und Ausfallzeiten erhöhen. Ferner führen Beschädigungen der Auflagestege 11 zu höheren Servicekosten für den Austausch oder zu längeren Stillstandzeiten. Im Fall von einem Abtrag des Auflagestegs 11 im Ablagebereich 11A kann sich ferner die Anzahl der Auflagepunkte reduzieren, was das Risiko eines Verkippens von Werkstücken 9 erhöhen kann. Verläuft die Schneidlinie 10 in der Nähe eines Auflagebereichs 11A besteht ein erhöhtes Risiko für eine Qualitätsminderung z. B. der Unterseite des Werkstücks. Auch kann der Schneidprozess zusammenbrechen, wenn geschmolzenes Material nicht ausreichend aus dem Spalt ausgeblasen werden kann und somit ein Werkstück nicht vollständig abgetrennt wird, was jeweils zu mehr Ausschussteilen führen kann.

Eine Aufgabe der hierin beschriebenen Schachtelungsverfahren ist es somit auch, eine prozessorientierte Anordnung der Werkstücke 9 in der Materialtafel 7 vorzuschlagen, die die zuvor aufgeführten Risiken und mögliche Zusatzkosten aufgrund von z. B. Ausschussteilen sowie Service und Ausfall der Flachbettwerkzeugmaschine reduziert.

Ferner können beispielsweise zusätzlich butzenspezifische Aspekte unter Einbeziehen der Positionen der Auflagebereiche bewertet werden, wie eine Verkippungswahrscheinlichkeit eines aus einem Werkstück ausgeschnittenen Innenbereichs (Butze) oder die Wahrscheinlichkeit, dass eine Butze aus dem Werkstück fällt. Ersteres kann bei der Schachtelung mit Hilfe der angesprochenen, die Verkippung bewertenden Bewertungsverfahren erfolgen, letzteres beispielsweise durch den Abgleich von Auflageräumen mit den Butzenräumen.

Fig. 2 zeigt einen Schachtelungsplan 21, wie er mit einer Anordnungsvorschrift in einem zweidimensionalen Planungsraum 23 mithilfe eines Algorithmus erzeugt werden kann. Dies kann z. B. eine als Bottom (Hauptrichtung)-Left (Nebenrichtung)-Anordnungsvorschrift sein. In Fig. 2 verläuft die Hauptrichtung von rechts nach links und die Nebenrichtung von oben nach unten. Der Planungsraum 23 wird im Bereich einer Planungstafel 25 aufgespannt. Die Planungstafel 25 wird für den Schneidvorgang auf die Materialtafel derart übertragen, dass entsprechende Geometriedaten des Planungsraums 23 dem von der Flachbettwerkzeugmaschine 1 für eine Werkstücktafel 7 bereitgestellten Bearbeitungsbereich entsprechen (und die Lagerung mit den angenommenen Positionsdaten der Auflageräume übereinstimmt). Im vorliegenden Beispiel ist ein rechteckiger Planungsraum 23 angenommen worden, der auf eine entsprechend rechteckig geformte Materialtafel angewandt werden soll. Andere Formen sind ebenfalls denkbar.

Der Schachtelungsplan wird in einer dem Schneidvorgang vorausgehenden Planungsphase erstellt, beispielsweise mit der Steuerungseinheit der Flachbettwerkzeugmaschine, wenn in die Planung z. B. aktuell erfasste Positionsdaten einfließen, oder in einer eigenständigen Planungseinheit mit entsprechender Rechenkapazität, falls z. B. von vorbestimmten Positionsdaten ausgegangen wird und diese dann nachträglich für den Schneidvorgang aufgrund einer entsprechenden Positionierung der Materialtafel auf der Palette und den Auflagestegen umgesetzt werden. Die Erstellung des Schachtelungsplans kann eine Teilaufgabe des Fertigungssteuerungs-Systems sein.

Der Schachtelungsplan 21 zeigt eine überlappungsfreie Anordnung von Teilräumen 9A-9F im zweidimensionalen Planungsraum 23, wobei die (ebenfalls zweidimensionalen) Teilräume 9A-9F sechs verschiedenen Typen von Werkstücken entsprechen. Der Schachtelungsplan 21 betrifft die Erzeugung von hier beispielhaft 50 Testwerkstücken.

Der dargestellten Anordnung liegt eine Einfügereihenfolge für die insgesamt 50 Teilräume zugrunde. Eine Einfügereihenfolge bestimmt allgemein die Reihenfolge, mit der die Teilräume bei einer sequenziellen Erzeugung des Schachtelungsplans 21 nacheinander in den Planungsraum 23 eingefügt und hier beispielhaft gemäß einer Bottom-Left-Anordnungsvorschrift (Strategie) im Planungsraum 23 angeordnet werden.

Im Schachtelungsplan 21 ist ferner schematisch eine räumliche Anordnung von vorbestimmten Auflageräumen 27 festgehalten. Zur Verdeutlichung des Ursprungs der Auflageräume sind diese teilweise, ähnlich den Auflagestegen, in Linien zusammengefasst und nur im Bereich der Teilräume 9A-9F lokalisiert als Punkte dargestellt. Wie bereits angesprochen liegen für die nachfolgend beschriebenen Bewertungs- und Schachtelungsverfahren Positionsdaten vor, die die Positionen der Auflageräume 27 im Planungsraum 23 angeben. Die Positionsdaten werden insbesondere bei der Bewertung von Lagen der Teilräume verwendet.

Zur Verdeutlichung werden weitere Schneidprozessdaten und -parameter in einem vergrößerten Ausschnitt einer Ecke des Planungsraums 23 gezeigt. Jeder der Teilräume ist durch eine oder mehrere geschlossene Konturen begrenzt. Beispielhaft sind für den Teilraum 9A (gestrichelt hervorgehoben) eine Außenkontur 31A und eine Innenkontur 31B eingezeichnet. Für eine Außenkontur 31A' des Teilraums 9B sind zusätzlich ein Einstichpunkt E, ein Anfahrweg A und ein Druckpunkt D eingezeichnet.

Die beispielhaften Teilräume haben unterschiedliche Größen, sind aber z. B. alle klein genug, damit der Gasdruck die Stabilität eines Teilraumes beeinflussen kann. Im vergrößerten Bereich der Fig. 2 erkennt man einzelne Auflageräume 27 innerhalb des Teilraums 9B, die zusammen mit dem jeweiligen Druckpunkt D und dem jeweiligen Schwerpunkt S eines Teilraums eine Kippanfälligkeit eines durch den Teilraum 9B bestimmten Werkstücks definieren.

Dem in Fig. 2 abgebildeten Schachtelungsplan 21 liegt ferner ein Werkstückmindestabstand zugrunde, der u. a. durch die Materialdicke der zu schneidenden Materialtafel und den vorzunehmenden Schneidparametern festgelegt wird. Der Werkstückmindestabstand hat mindestens zwischen zwei benachbarten, im Planungsraum 23 angeordneten Teilräumen 9A-9F vorzuliegen. Er liegt z. B. in einem Bereich von beispielsweise 5 mm bis 20 mm, insbesondere 10 mm.

Für die nachfolgend beschriebenen Schachtelungsverfahren können allgemein Anordnungsvorschriften eingesetzt werden, die definieren, wie Teilräume im Planungsraum nacheinander räumlich angeordnet werden. Dies ist nicht auf eine Bottom-Left-Strategie beschränkt, wie sie den in den Figuren gezeigten beispielhaften Schachtelungsplänen zugrunde liegt. Vielmehr können z. B. auch Bottom-Left-Fill-Strategien oder No-Fit-Polygon-Ansätze verfolgt werden.

Mit Bezug auf das in Fig. 3 gezeigte Flussdiagramm eines Verfahrens 39 zur Erzeugung eines Schachtelungsplans gehen die hierin vorgeschlagenen Schachtelungsverfahren allgemein davon aus, dass Schneidprozessdaten (wie Geometriedaten des Planungsraums, Positionsdaten für die Positionen der Auflageräume, mehrere anzuordnende Teilräume und deren Anzahldaten) zusammen mit Schachtelungseingangsparametern (wie Werkstückmindestabstand, Einfügereihenfolge und Anordnungsvorschrift) bereitgestellt werden (Schritte 41A, 41B).

Ein Schachtelungsverfahren ordnet in einem ersten Schritt 43 gemäß der Einfügereihenfolge und der Anordnungsvorschrift einen ersten Teilraum im Planungsraum (Initiallage des ersten in der Einfügereihenfolge aufgeführten Teilraums) an. Eine Lage bezieht sich hierin üblicherweise auf einen Referenzpunkt eines der Teilräume, z. B. auf einen Flächenschwerpunkt, der (eine gleichmäßige Dicke der Materialtafel vorausgesetzt) dem Massenschwerpunkt eines ausgeschnittenen Werkstücks entspricht. (Es wird angemerkt, dass die nachfolgend beschriebenen Bewertungen vorwegnehmend schon dieser erste Anordnungsschritt, d. h., die Initiallage, bewertet und entsprechend durch Variieren der Lage des Teilraums oder weiterer Parameter verbessert werden kann.)

In einer Abfolge von weiteren Schritten 45A, 47A ... werden nun weitere Teilräume gemäß der Einfügereihenfolge und der Anordnungsvorschrift im Planungsraum eingefügt. Dabei ordnet die Anordnungsvorschrift einem neu eingefügten Teilraum im Planungsraum jeweils eine Ausgangslage zu, in der mindestens ein Punkt des Teilraums im Werkstückmindestabstand von einem anderen bereits eingefügten Teilraum angeordnet ist.

Nach jedem neuen Einfügen eines Teilraums wird z. B. eine Packungsdichtenbewertung und eine die Positionsdaten einbeziehende Bewertung der jeweiligen Ausgangslage des neu eingefügten Teilraums durchgeführt (Schritt 45B, 47B, ...), beispielsweise zur Bewertung einer Beschädigungsrate oder eines Kippverhaltens.

In Abhängigkeit eines Bewertungsergebnisses der Ausgangslage eines neu eingefügten Teilraums wird mindestens eine Alternativlage identifiziert (Schritt 45C, 47C, ...). Die Alternativlagen werden wieder z. B. mit der mindestens einen die Positionsdaten einbeziehende Bewertung bewertet (Schritt 45B', 47B', ...).

Nun werden die Bewertungsergebnisse der Ausgangslage und der mindestens einen Alternativlage verglichen (Schritt 45D, 47D, ...). Basierend auf dem Ergebnis wird spezifisch für die Einfügereihenfolge eine der bewerteten Lagen als Schneidlage für den neu eingefügten Teilraum im Schachtelungsplan festgelegt (Schritt 45E, 47E, ...). Für einen Teilraum ist die Anordnung mit der Festlegung der Schneidlage abgeschlossen und der nächste Teilraum gemäß der Einfügereihenfolge wird festgelegt und eingefügt.

Sind auf diese Weise alle Teilräume gemäß der Einfügereihenfolge hinzugefügt, bewertet und in der Lage bezüglich der Positionsdaten verbessert, insbesondere optimiert, worden, ist ein Schachtelungsplan 49A erzeugt worden, der die an den Schneidlagen angeordneten Teilräume umfasst. Für den Schachtelungsplan 49A kann eine Gesamtbewertung aus den Bewertungen der einzelnen Teilräume gebildet werden. Der Schachtelungsplan 49A kann (beispielsweise zusammen mit seiner Gesamtbewertung) ausgegeben oder in einem Speicher der Steuerungseinheit oder der Planungseinheit abgelegt werden (Schritt 49).

Alternativlagen können allgemein durch Anwenden einer Translations- und/oder Rotationsoperation auf eine Ausgangslage (oder eine bereits erzeugte Alternativlage) erzeugt werden. Die Alternativlagen können beispielsweise durch schrittweises Verschieben um vorgegebene Inkremente in ein oder zwei Richtungen erzeugt werden, wobei jeweils überprüft wird, ob die Teilräume überlappungsfrei sind und noch im Planungsraum liegen. Die Verschiebung kann von einer Rotation des Teilraums begleitet werden oder es kann nur eine Rotation vorgenommen werden, wenn z. B. die Randbedingung der überlappungsfreien Anordnung mit einer reinen Verschiebung nicht erfüllt werden kann. Ferner kann die Verschiebung bevorzugt entgegen einer letzten der Anordnungsvorschriften zugrunde liegenden Richtung erfolgen.

Alternativ kann sie entlang einer Richtung, in der der Mindestabstand zu einem benachbarten Teilraum (oder einer Randkontur des Planungsraums, die in diesem Fall z.B. einer Kontur eines Teilraums vergleichbar ist, evtl. mit einem anderen Mindestabstand) vorliegt. Die Verschiebung kann ferner entlang einer Verbindungslinie von Schwerpunkten benachbarter Teilräume erfolgen.

Die Figuren 4A bis 4C zeigen jeweils zwei Teilräume 9A und 9G in einem Planungsraum 23, der einem Schneidplan zugrunde liegen könnte. Ferner verdeutlichen die Figuren 4A bis 4C eine Projektion des Planungsraums 23 auf ein Koordinatensystem der Flachbettwerkzeugmaschine, indem schematisch die Palette 23 mit einer Mehrzahl von Auflagestegen 11 und eine Materialtafel 7 angedeutet sind. Die vorbestimmten Positionen der Auflagestege 11 legen die Positionsdaten der Auflageräume im Planungsraum 23 fest.

Die Figuren 4A und 4B verdeutlichen Möglichkeiten, wie die Lagen der Teilräumen 9A und 9G bezüglich des Planungsraums 23 variiert werden können. Beispielsweise kann der Teilraum 9A frei im Planungsraum 23 verschoben werden (Fig. 4A) oder seine Lage kann mit der Lage eines anderen Teilraums ausgetauscht werden (Fig. 4B). Des Weiteren können alternativ oder ergänzend Rotationsbewegungen eines Teilraums vorgenommen werden.

Ferner können die Lagen der Teilräumen 9A und 9G bezüglich der Positionsdaten von Auflageräumen im Planungsraum 23 verschoben werden. Dies entspricht einer Variation der Projektion des Planungsraums 23 auf die Palette 5A und damit einer Änderung der Positionsdaten der Auflageräume im Planungsraum 23.

Mit Bezug auf das in Fig. 5 gezeigte schematische Flussdiagramm eines Verfahrens 71 zur Schachtelung von beliebigen Teilräumen im zweidimensionalen Planungsraum kann das Verfahren zur Erzeugung eines Schachtelungsplans insbesondere für eine Umsetzung in einen Algorithmus in eine Einfügereihenfolge von Teilräumen und eine feststehende Anordnungsvorschrift zerlegt werden. Z. B. kann mit einem evolutionären Algorithmus die Einfügereihenfolge der einzufügenden Teilräume mit einem Verbesserungsziel verändert werden, um eine Einfügereihenfolge mit einem möglichst guten Gesamtbewertungswert zu erreichen. Eine Implementierung eines Schachtelungsalgorithmus als evolutionären Algorithmus ist beispielweise in "Genetic Algorithms and Grouping Problems", E. Falkenauer, New York: Wiley, 1998 offenbart.

Die hierin vorgeschlagene Bewertung kann dabei beispielsweise den Ansatz umsetzen, dass, um gute Verbesserungen zu erzielen, eine Anordnungsvorschrift verwendet werden kann, die die Teile nicht zwangsläufig zur Ausbildung einer dichtesten Packung einfügt, sondern auch die Lage des Teilraums (Werkstücks) im Planungsraum (Blech, Materialtafel) und die Lage des Teilraums (Werkstücks) relativ zu den Auflagebereichen (Stützstellen der Auflagestege) berücksichtigt.

In dem in Fig. 5 gezeigten Flussdiagramm basiert die Erzeugung eines Schachtelungsplans im Verfahren 71 auf einer vorgegebenen Einfügereihenfolge. Diese kann als Datenpaket eines Algorithmus eingesetzt werden, der ausgelegt ist den Schachtelungsplan zu verbessern durch
a. Überprüfung mehrerer Datenpakete nach vorgegebenen Auswahl-Kriterien,
b. Auswahl bestimmter Datenpakete als Ergebnis der Überprüfung,
c. Erzeugung weiterer Datenpakete durch Kombination der ausgewählten Datenpakete,
d. Veränderung der weiteren Datenpakete, insbesondere nach zufällig vorgegebenen Vorschriften, zu veränderten weiteren Datenpaketen,
e. Optional: Erzeugen von Bewertungsdaten aus einer Bewertung der veränderten weiteren Datenpakete nach vorgegebenen Güte-Kriterien,
f. Optional: Erzeugen von kombinierten Datenpaketen aus der Kombination der Bewertungsdaten mit den veränderten weiteren Daten,
g. Vergleich der Qualität der kombinierten und/oder veränderten und/oder ausgewählten Datenpakete anhand vorgegebener Qualitätsmerkmale,
h. Wiederholen der Schritte a. bis g. für die kombinierten Datenpakete, bis der Vergleich der Qualität in Schritt g einen vorgegebenen Wert erreicht.

In einem ersten Schritt 73 des Schachtelungsverfahrens 71 werden die Datenpakete initialisiert. Die initialen Einfügereihenfolgen können z. B. stochastisch erzeugt werden oder auf Erfahrungswerten basieren.

Jedes der Datenpakete dient der Erzeugung eines Schachtelungsplans (Schritt 39), wie beispielsweise in Zusammenhang mit Fig. 3 erläutert wurde. Eine Bewertung wird dabei wie oben beschrieben auf einer Packungsdichtenbewertung in Kombination mit mindestens einer die Positionsdaten der Auflageräume einbeziehenden Bewertung aufgebaut.

Als Nächstes wird für die gesamte Menge der Datenpakete ein Vergleich der Gesamtbewertungen durchgeführt (Schritt 75). Basierend auf gut bewerteten Datenpaketen werden weitere Datenpakete durch Auswahl, Veränderung und Kombination erzeugt (Schritt 77), um als neue Datenpakete weitere Schachtelungspläne im erneut durchgeführten Schritt 39 zu erzeugen, im erneut durchgeführten Schritt 75 Gesamtbewertungen zu erzeugen und diese zu vergleichen, um darauf aufbauend immer wieder neue Datenpakete zu erschließen. Die Auswahl und Kombination sorgt dabei allgemein dafür, dass gut bewertete Datenpakete mehr Einfluss auf die folgenden Datenpakete haben. Die Bewertung und Erschließung weiterer kombinierter und/oder veränderter und/oder ausgewählter Datenpakete wird beispielsweise bis zu einem vorgegebenen oder gewünschten Qualitätsmerkmal fortgesetzt. Die Bewertung kann auch abgebrochen werden, wenn die Verbesserung der Qualität einen bestimmten Wert erreicht hat, also z. B. eine weitere Qualitätsverbesserung unter einen vorgegebenen Wert bleibt.

Der Schachtelungsplan mit der dann vorliegenden, bestimmte Kriterien erfüllenden (als für die vorliegenden Interessen als "beste" bestimmte) Gesamtbewertung wird abschließend z. B. als schneidprozessorientierter Schachtelungsplan 79A ausgegeben (Schritt 79).

Figuren 6 bis 13 beziehen sich auf einen beispielhaften Bewertungsansatz zur Bewertung eines Schachtelungsplans hinsichtlich des Einflusses von Auflageräumen auf den Schneidprozess.

Fig. 6 zeigt den Teilraum 9B aus Fig. 2 vergrößert. Man erkennt eine Außenkontur 31A', die den Teilraum 9B begrenzt, sowie beispielhaft punktförmige Auflageräume 27. Auflageräume 27 in den Bereichen 83 fallen im Wesentlichen mit der Außenkontur 31A' im Bereich der Einschnitte 84 zusammen. Auflageräume 27 in einem Bereich 85 liegen in der Nähe der Außenkontur 31A' im Bereich der Einschnitte 84. Auflageräume 27 in einem Bereich 87 liegen fern von der Außenkontur 31A'. Der nachfolgend erläuterte Bewertungsvorgang differenziert die Auswirkungen der Auflageräume 27 auf den Schneidprozess u. a. für derartige Kategorien von Relativpositionen zwischen Auflageraum und Kontur.

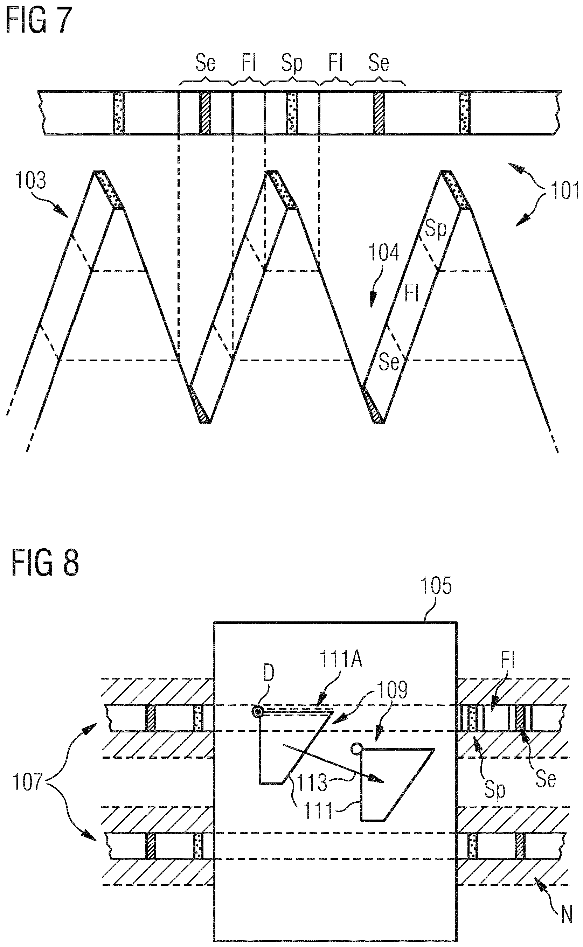

Die Relativpositionen werden in Fig. 7 mit einer Aufsicht auf einen Auflagesteg 101 und einer schematischen Perspektivansicht des Auflagestegs 101 beispielhaft anhand einer Stegstruktur verdeutlicht, bei der Auflagespitzen 103 durch "V"-förmige Senken 104 voneinander getrennt werden. Die Materialtafel liegt während des Schneidprozesses stationär auf einer Vielzahl von Auflagespitzen 103.

Für einen derartigen Auflagesteg zeigt Fig. 8 einen Ausschnitt 105 eines Planungsraums durch den zwei Aufreihungen 107 von (Lagerungs-) Räumen verlaufen, die in Bezug zu den Auflageräumen stehen, die beispielsweise durch die Stegstruktur der Fig. 7 gebildet werden könnten.

Nachfolgend wird ein Verfahren zum Bewerten einer Lage eines Teilraums, der in einem zweidimensionalen Planungsraum angeordnet ist, beispielhaft erläutert. Der Teilraum gehört zu einem Schachtelungsplan, der für eine Ansteuerung eines Schneidprozesses einer Flachbettwerkzeugmaschine zum Ausschneiden von Werkstücken aus einer Materialtafel vorgesehen ist. Allgemein umfasst der Schachtelungsplan eine überlappungsfreie Anordnung von den Werkstücken entsprechenden (zweidimensionalen) Teilräumen im Planungsraum sowie eine räumliche Anordnung von vorbestimmten Auflageräumen und Auflageumgebungsräumen. Die Auflageräume entsprechen Lagerungsoberflächenbereichen der Materialtafel, die während des Schneidprozesses gelagert sind, und an die sich Auflageumgebungsräume anschließen.

Beispielhaft zeigt Fig. 8 einen Teilraum 109, bei dem der Druckpunkt D und ein Abschnitt 111A einer den Teilraum 109 begrenzenden Außenkontur 111 über einer der Aufreihungen 107 verläuft. Zusätzlich zeigt Fig. 8 den Teilraum 109 nach einer Verschiebung entlang eines Pfeils 113, wodurch die Außenkontur 111 sich nun zwischen den Aufreihungen 107 befindet.

Für das Verfahren zum Bewerten einer Lage eines Teilraums werden Konturdaten (die eine Schneidkontur angeben, die den Teilraum in der zu bewertenden Lage im Planungsraum begrenzt), Positionsdaten (die die Positionen von bei der Bewertung zu berücksichtigenden Räumen im Planungsraum angeben) und Schneidvorgangsdaten (die für mindestens einen Abschnitt der Schneidkontur einen Typ eines Schneidvorgangs angeben) bereitgestellt. Die zu berücksichtigenden Räume umfassen eine Gruppe von Auflageräumen und eine Gruppe von Auflageumgebungsräumen.

Mit Blick auf die Figuren 7 und 8 können mehrere mögliche Kategorien von Relativpositionen zwischen Positionen/Abschnitten der Kontur und den Aufreihungen von Lagerungsräumen (wie Auflageräume, Auflageumgebungsräume) als Räume im Planungsraum definiert werden.

Beispiele für Kategorien aus Sicht der Umsetzung (Projektion) des Schachtelungsplans auf die Materialtafel sind:
- aufliegend (Spitzen-Raum SP als Beispiel für einen Auflageraum),
- neben einer Auflagespitze 103 und mit geringen Abstand oberhalb der Oberfläche der Lagerung, z. B. oberhalb des Auflagestegs 101 (Flanken-Raum Fl als Beispiel für einen Auflageumgebungsraum, insbesondere einen (nahen) Auflageüberlagerungsraum, der eine unter der Materialtafel liegende, nicht zu weit entfernte Struktur aufweist),
- zwischen den Auflagespitzen 103 und mit großem Abstand oberhalb der Oberfläche der Lagerung (Senken-Raum Se als Beispiel für einen Auflageumgebungsraum, insbesondere einen (fernen) Auflageüberlagerungsraum, der eine unter der Materialtafel liegenden, etwas weiter entfernte Struktur aufweist) und
- nahe/direkt neben einem Auflagesteg 101 (naher Raum N als weiteres Beispiel für einen Auflageumgebungsraum, jedoch ohne einer unter der Materialtafel liegenden Struktur, hierin auch als Auflagefreiraum bezeichnet).

Die Räume Sp, Fl, Se aus dem Planungsraum sind zur Verdeutlichung auch in der physischen Darstellung des in Fig. 7 gezeigten Auflagestegs angedeutet. Ähnlich sind auch schematisch die Positionen der Spitzen und Senken im Planungsraum angedeutet.

Am Beispiel einer Flachbettwerkzeugmaschine, die zur Lagerung der Materialtafel eine Palette mit einer Mehrzahl von Auflagestegen, die jeweils eine Mehrzahl von Stegspitzen aufweisen, aufweist, können die Auflageumgebungsräume sowohl Auflageüberlagerungsräume, die Bereichen der Materialtafel entsprechen, die während des Schneidprozesses über einem Auflagesteg liegen, als auch Auflagefreiräume, die Bereichen der Materialtafel entsprechen, die nicht über einem Auflagesteg beim Schneidprozess liegen, umfassen. Verfahrensgemäß kann dann die Schneidkontur in Abschnitte, die in einem Auflageüberlagerungsraum liegen, und Abschnitte, die in einem Auflagefreiraum liegen, untergliedert werden und für diese können jeweils Konturabschnittslängen unter Verwendung der Positionsdaten, der Konturdaten und der Schneidvorgangsdaten ermittelt werden. Beispielsweise kann für den Abschnitt einer Kontur in einem Raum die Länge entlang des Verlaufs der Kontur bestimmt werden. Bei einem nicht geradlinigen Verlauf kann eine Annährung der Abschnittslänge z. B. durch ein Zerlegen des Abschnitts in mehrere lineare Unterabschnitte vorgenommen werden oder sie kann auf dem Abstand zwischen Eintrittspunkt und Austrittspunkt der Kontur in bzw. aus dem Raum basieren. Ferner kann beispielsweise für einen Einstichpunkt die Länge binär als in einem Raum liegend oder als nicht im Raum liegend bestimmt werden. Die Konturabschnittslängen können dann in die Berechnung der Beschädigungsrate für die Schneidkontur mit entsprechenden Gewichtungsfaktoren einbezogen werden.

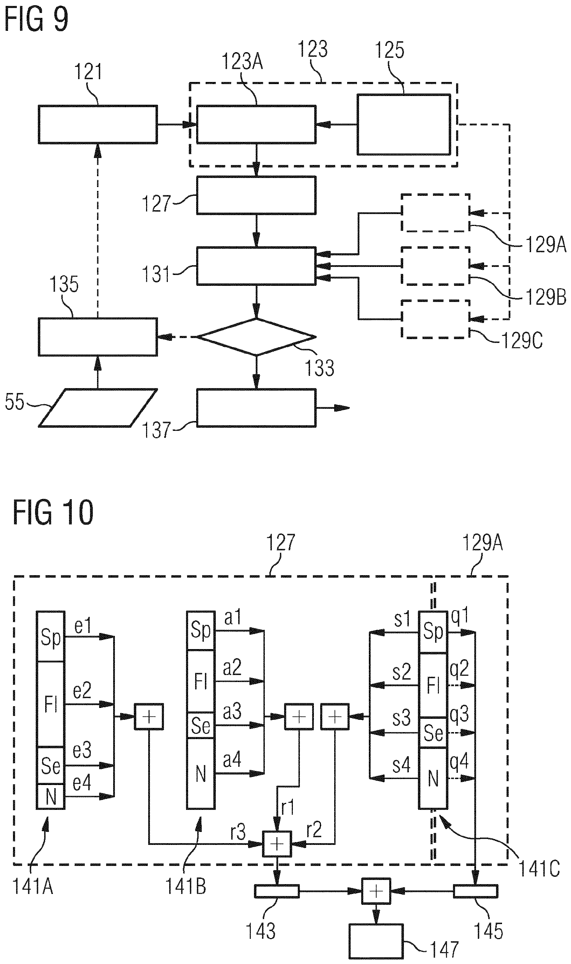

Fig. 9 zeigt einen beispielhaften Ablauf einer Positionsdaten einbeziehenden Bewertung einer Lage eines Teilraums; d. h., es werden Relativlagen zwischen Räumen (insbesondere Gruppen von Räumen) der Lagerung und einem Teilraum berücksichtigt. Das Bewertungsverfahren des im Planungsraum definierten Schachtelungsplans bzw. seiner Teilräume betrifft in der Umsetzung den Schneidprozess einer Anordnung von Werkstücken auf einer Materialtafel, die mit einer Flachbettwerkzeugmaschine gemäß werkstückspezifischen Schneidkonturen auszuschneiden sind. Die Flachbettwerkzeugmaschine weist zur Lagerung der Materialtafel beispielsweise eine Palette mit einer Mehrzahl von Auflagestegen auf, wobei jeder Auflagesteg eine Mehrzahl von Stegspitzen aufweist, auf denen beim Schneidvorgang die Materialplatte ortsfest liegt.

Wird eine Materialtafel auf der Palette abgelegt, können Lagedaten der Materialtafel bezüglich der Palette bestimmt werden, wobei aus einer räumlichen Anordnung der Materialtafel der Planungsraum abgeleitet werden kann, in dem dann die Auflageräume, Auflageüberlagerungsräume und die Auflagefreiräume definiert sind.

Es wird somit davon ausgegangen, dass Positionsdaten, die die Positionen der Lagerungsräume, insbesondere der Auflageräume, im Planungsraum angeben, bekannt sind. In der Umsetzung des Schachtelungsplans bedeutet dies, dass entweder die Materialtafel entsprechend auf den Stegspitzen der Palette auszurichten ist oder dass Lagedaten der Materialtafel bezüglich der Palette vor der Durchführung des Verfahrens bestimmt werden. Allgemein werden somit Positionen der Auflagestege, der Stegspitzen bezüglich der Palette und/oder bezüglich der Materialtafel erfasst und/oder bereitgestellt. Evtl. werden zusätzlich Anordnungsdaten bezüglich der Anordnung der Planungstafel auf der Materialtafel gemessen oder vorbestimmt oder für die Projektion vorgegeben.

Das in Fig. 9 gezeigte Verfahren kann als Teilschritt im Verfahren zur Erzeugung des Schachtelungsplans der Teilräume (Konturen der Teilräume entsprechen den späteren Schneidlinien) für einen Schneidvorgang durchgeführt werden. Mit dem Verfahren wird eine Beschädigungsrate für eine zu bewertende Lage einer Kontur eines Teilraums bestimmt. Dazu werden Lagerungsraum-nahe (d. h., stegnahen Abschnitte) der Kontur untersucht und beispielsweise in die obigen Raumkategorien Sp, Fl, Se, N untergliedert. Dies umfasst u. a. ein Untergliedern in Räume, die bei der Umsetzung des Schachtelungsplans über einem oder neben einem Auflagesteg liegen würden.

Zur Berechnung der Beschädigungsrate einer Kontur werden wie hierin allgemein offenbart kumulierte Konturabschnittslängen unter Verwendung der Positionsdaten, der Konturdaten und der Schneidvorgangsdaten ermittelt. Jede der kumulierten Konturabschnittslängen ist spezifisch für einen Typ eines Schneidvorgangs und eine Gruppe von Räumen und entspricht einer kumulierten Länge der Abschnitte der Schneidkontur, die jeweils innerhalb der entsprechenden Gruppe von Räumen liegt. D. h., alle (Schneid-) Konturen eines Teilraums werden untersucht und hinsichtlich der Positionen von bei der Bewertung zu berücksichtigenden Räumen im Planungsraum bewertet. Dazu werden die Abschnitte, die alle in Räumen einer gleichen Gruppe von Räumen (beispielsweise alle in Auflageräumen) liegen und denen die gleiche Schneidart zugeordnet ist, gemeinsam betrachtet und ergeben zusammen die kumulierte Konturabschnittslänge für die jeweilige Gruppe und die jeweilige Schneidart.

Die Beschädigungsrate für die Schneidkontur in der zu bewertenden Lage wird durch gewichtetes Kombinieren der Konturabschnittslängen mit Gewichtungsfaktoren, die eine Beschädigungswahrscheinlichkeit in Abhängigkeit von der jeweiligen Gruppe von Räumen und vom jeweiligen Schneidvorgang definieren (beispielsweise eine Abschätzung aufgrund von Testmessungen vornehmen), berechnet.

Am Beispiel der Figuren 7 und 8 werden zur Berechnung der Beschädigungsrate einer Kontur die Räume mit Gewichtungsfaktoren versehen, die eine Beschädigungswahrscheinlichkeit der Auflagestege in Abhängigkeit von den Bereichen und Schneidarten definieren. Dabei kann auch der Schneidvorgang mit Gewichtungen versehen werden, wenn mehrere Schneidarten eingesetzt werden, die beispielsweise nach eingebrachter Laserleistung differenziert werden können. Schneidarten können den Einstich, das Anfahren der Kontur und das Scheiden entlang der Kontur betreffen. Hierin wird unter einem Anfahrvorgang ein (reduziertes) Anfahren des Schneidvorgangs verstanden. Dies kann durchgeführt werden, um einen prozesssicheren Übergang vom Einstich auf gewählte Schneidparameter beim Schneidvorgang sicher zu stellen. Der Anfahrvorgang erfolgt üblicherweise an Hand von Regelwerken, wobei die Einstellung der Schneidparameter u. U. bereits entlang eines Schneidlinienabschnitts vorgenommen werden kann, der noch nicht Teil der Schneidkontur des Teilraums ist. Dabei wird insbesondere mit zunächst einem angepassten (reduzierten) Vorschub und evtl. weiteren modifizierten Schneidparametern begonnen und sodann gemäß dem Regelwerk eine Adaption auf die Standardparameter vorgenommen, bei denen die angestrebte Wechselwirkung mit dem Material der Materialtafel bewirkt wird.

Für einen Teilraum wird dann ein Bewertungswert für die zu bewertende Lage des Teilraums unter Verwendung der berechneten Beschädigungsrate der Schneidkontur bestimmt.

Unter Verwendung der Bewertungswerte aller Teilräume kann entsprechend eine Bewertungsgröße des Schachtelungsplans basierend auf den berechneten Beschädigungsraten der Konturen ausgegeben werden. Ferner kann der Bewertungswert eines Teilraums kann in einem Schachtelungsverfahren zur Bewertung einer Lage eines Teilraums und zur Verbesserung derselben genutzt werden.

Dieses Grundkonzept spiegelt sich im Flussdiagramm der Fig. 9 wider. Die Bewertung beginnt mit dem Platzieren eines Teilraums in einer zu bewertenden Lage im Planungsraum (Schritt 121). Je nach Stand im Schachtelungsverfahren kann dies z. B. die Initiallage, eine Ausgangslage oder eine Alternativlage sein.

Im Schritt 123 werden die einzelnen Positionen der Kontur des Teilraums untersucht. Insbesondere wird die Schnittmenge der Kontur des Teilraums mit den Lagerungsräumen (Sp, Fl, Se, N) gebildet (Schritt 123A) und entsprechende Positionen der Kontur werden gespeichert. Werden zusätzlich bei der Kontur vorgesehene Schneidarten bereitgestellt (Schritt 125), können die einzelnen Positionen ferner mit den angesprochenen Schneidarten assoziiert werden.

Darauf basierend werden Stegbeschädigungswerte, beispielsweise wie nachfolgend in Zusammenhang mit Fig. 10 erläutert, berechnet (Schritt 127).

Sollen weitere positionsabhängige Bewertungen berücksichtigt werden, beispielsweise eine Teilqualität (Schritt 129A), eine Kippauswertung (129B) oder eine Butzenanalyse (129C), können diese mit in einen Bewertungswert einfließen (Schritt 131), der für die zu bewertende Lage des Raumteils abgelegt wird.

Nun wird geprüft, ob eine weitere Lage zu bewerten ist (Schritt 133). Ist dies der Fall, beispielsweise wenn noch nicht alle Alternativlage geprüft wurden, kann eine Alternativlage ausgewählt werden (Schritt 135) und als zu bewertende Lage in Schritt 121 dem Bewertungsverfahren zugeführt werden.

Sind alle Lagen durchlaufen, wird die mit dem geeignetsten Bewertungswert ausgewählt und z. B. als Schneidlage ausgegeben (Schritt 137). Gemäß der Anordnungsvorschrift wird nun der nächste Teilraum eingefügt und seine Ausgangslage wird zur zu bewertenden Lage. Dies wird fortgesetzt bis alle Teilräume der Einfügereihenfolge eingefügt wurden. Alle Bewertungswerte zusammen bilden dann den Gesamtbewertungswert des sich ergebenden Schachtelungsplans.

Bezugnehmend auf die Schritte 123A bis 127 der Fig. 9 und die Figuren 7 und 8 werden in einem Verfahren zur Bewertung der Lage eines Teilraums den Auflageräumen Sp mithilfe der Positionsdaten Abschnitte der Schneidkontur oder Positionen entlang der Schneidkontur den Gruppen von Räumen zugeordnet. Der Bewertungswert der zu bewertenden Lage des Teilraums wird in Abhängigkeit des Ausmaßes der zugeordneten Abschnitte der Schneidkontur oder der Positionen entlang der Schneidkontur für den Auflageraum bestimmt. Weiteren Lagerungsräumen (die Auflageumgebungsräume Fl, N, Se) werden mithilfe der Positionsdaten Abschnitte der Schneidkontur oder Positionen entlang der Schneidkontur zur Bewertung der zu bewertenden Lage des Teilraums zugeordnet. Kumulierte Konturabschnittslängen für diese Lagerungsräume können so in Abhängigkeit des Ausmaßes der den weiteren Lagerungsräumen zugeordneten Abschnitte der Schneidkontur oder der Positionen entlang der Schneidkontur bestimmt werden. Die kumulierten Konturabschnittslängen der Auflageräume Sp und der weiteren Lagerungsräume Fl, N, Se können mit Gewichtungen kombiniert werden, um den Bewertungswert für die zu bewertende Lage des Teilraums abzuleiten.

Ferner können in dem Verfahren Anschnittdaten, die den Schneidkonturen zugeordnet sind und die einen Einstechvorgang und optional einen Anfahrvorgang für die Schneidkontur angeben, sowie Schneidvorgangsdaten für den Einstechvorgang und optional den Anfahrvorgang angegeben und verwendet werden. So kann z. B. die Anzahl der Einstiche in einer Gruppe (die kumulierte Konturabschnittslänge von Einstichvorgängen wird hierin vereinfacht auch als Einstichanzahl bezeichnet) und optional Anfahrabschnittslängen jeweils für die Gruppen von Räumen unter Verwendung der Positionsdaten, der Anschnittdaten und der Schneidvorgangsdaten ermittelt werden. Die Einstichanzahlen und optional die Anfahrabschnittslängen können in die Berechnung der Beschädigungsrate für die Schneidkontur mit entsprechenden Gewichtungsfaktoren eingehen.

Für die Bewertung einer zu bewertenden Lage kann ferner eine Teilequalitätsauswertung durchgeführt werden, die in den Bewertungswert für die zu bewertende Lage des Teilraums einfließt. Die Teilequalitätsauswertung hängt z. B. von der Konturabschnittslänge der Auflageräume ab, da insbesondere der Schneidvorgang durch die Auflage beeinflusst werden kann und sich auf die Teilequalität auswirken kann.

Für die Bewertung einer zu bewertenden Lage kann ferner eine Kippauswertung durchgeführt werden, die in den Bewertungswert für die zu bewertende Lage des Teilraums einfließt und die eine Berechnung von Abständen zwischen einem Schwerpunkt des Teilraums und Auflageräumen, die mit dem Teilraum überlappen, umfasst.

Weist ein Teilraum eine Außenkontur und eine geschlossenen Innenkontur auf, die innerhalb der Außenkontur liegt, kann für die Bewertung einer zu bewertenden Lage ferner eine Auflageauswertung für einen Innenraum der Innenkontur durchgeführt wird, die in den Bewertungswert für die zu bewertende Lage des Teilraums einfließt, und die eine Berechnung einer Überlappung der Innenkontur mit Auflageräumen und optional mit Auflageüberlagerungsräumen umfasst.

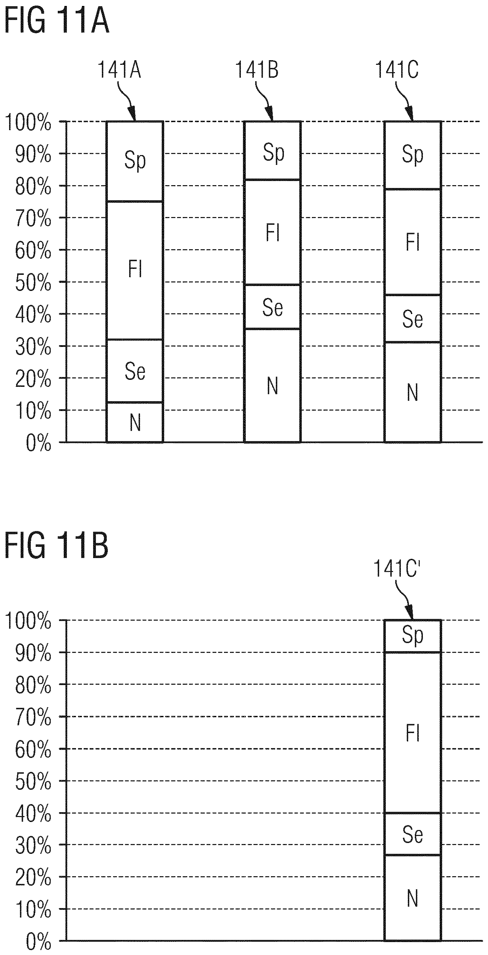

Fig. 10 gibt ein Beispiel für Berechnungen, die dem Schritt 127 (Berechnung des Beschädigungsrisikos) und dem Schritt 129A (Berechnung der Teilequalität) zugrunde liegen können. Es werden die Schneidarten Einstich (Balken 141A), Anfahren mit reduzierter Leistung (Balken 141B) und Schneiden (Balken 141C) berücksichtigt. In den drei Balken 141A, 141B, 141C sind gemäß der Schnittmengenbildung in Schritt 123A der Fig. 11 Positionen (Beiträge) der Kontur zusammengefasst, die den Räumen Sp, Fl, Se, N zugeordnet sind. Die Höhen der einzelnen Bereiche in den Balken entsprechen jeweils den kumulierten Konturabschnittslängen für die jeweiligen Gruppen von Räumen. Jedem Typ von Lagerungsraum Sp, Fl, Se, N sind Schneidart-spezifische Gewichtungsfaktoren e1-e4, a1-a4, s1-s4 zugeordnet. Mit diesen Gewichtungen fließen die Punkte auf der Kontur in die Lagerungsraum-spezifische Bewertung ein. Auch den Schneidarten können Gewichtungsfaktoren r1-r3 zugeordnet werden, die in die Schneidart-spezifische Kombination einfließen. Auf diese Weise kann für das Beschädigungsrisiko ein Stegbeschädigungsbewertungswert 143 bestimmt werden.

Für die Positionen auf der Kontur, die beispielsweise nur dem Schneiden (Balken 141C) zugeordnet sind, kann ferner eine Qualität der sich aus den Teilraumlagen ergebenden Werkstücke bewertet werden. Hierzu werden Lagerungsraum-spezifische Gewichtungsfaktoren q1-q4 verwendet, so dass für die Teilequalität ein Teilequalitätsbewertungswert 145 bestimmt werden kann. Dieser kann mit dem Stegbeschädigungsbewertungswert 143 zu einem Gesamtbewertungswert 147 der Kontur und damit des Teilraums kombiniert werden.

Man erkennt, dass den Auflageräumen 27 (Spitzen-Räumen Sp) mithilfe der Positionsdaten Abschnitte der Kontur oder Positionen entlang der Kontur zur Bewertung eines in einer Alternativlage 46 positionierten Teilraums zugeordnet werden. Ein Bewertungswert der Lage des zu bewertenden Teilraums wird sodann in Abhängigkeit des Ausmaßes der zugeordneten Abschnitte der Kontur oder der Positionen entlang der Kontur für den Auflageraum bestimmt.

Neben den Auflageräumen 27 können weiteren Lagerungsräume Fl, N, Se im Planungsraum identifiziert werden. Auch diesen können mithilfe der Positionsdaten Abschnitte der Kontur oder Positionen entlang der Kontur zur Bewertung eines in einer Alternativlage 46 positionierten Teilraums zugeordnet werden.

Bewertungswerte für die Lagerungsräume Fl, N, Se werden in Abhängigkeit des Ausmaßes der den weiteren Lagerungsräumen zugeordneten Abschnitte der Kontur oder der Positionen entlang der Kontur bestimmt. Entsprechend können die Bewertungswerte der Auflageräume und der weiteren Lagerungsräume mit Gewichtungen kombiniert werden, um einen Bewertungswert für eine zu bewertende Lage des Teilraums zu gewinnen.

Allgemein können die Gewichtungen von einem Energieeintragswert abhängen, wobei eine Gewichtung für einen Schneidvorgang im Stegspitzen-Raum größer sein kann (z. B. maximal ist). Geringere Gewichtungen können für einen Schneidvorgang im Stegflanken-Raum, für einen Schneidvorgang im Stegsenken-Raum und für einen Schneidvorgang im Raum nahe/direkt neben der Aufreihung der genannten Räume verwendet werden.

Die Figuren 11A und 11B zeigen die Auswirkung einer Verbesserung einer Lage eines Teilraums, der z. B. mehrere Innenkonturen und eine Außenkontur aufweist, unter Verwendung des hierin beschriebenen Bewertungsverfahrens. Fig. 11A zeigt die Situation gemäß dem Beispiel in Fig. 10 mit den Balken 141A, 141B, 141C für die Schneidarten Einstich, Anfahren mit reduzierter Leistung und Schneiden. Man erkennt, dass alle Gruppen von Räumen (Auflageräume und Auflageumgebungsräume sowie deren (Unter-) Gruppen nahe und ferne Auflageüberlagerungsräume sowie Auflagefreiräume, Konturabschnitte zugeordnet werden. D. h., die Kontur des Teilraums in der zu bewertenden Lage erstreckt sich beispielhaft in allen Räumen, die bei der Bewertung zu berücksichtigen sind. Mit anderen Worten sieht der Schneidplan vor, dass das zum Teilraum gehörende Werkstück mit Einstichvorgängen, Anfahrvorgängen und Schneidvorgängen über Stegspitzenräumen SP, Stegflankenräumen Fl, Stegsenkenräumen Se und nahen Räume N ausgeschnitten wird.

Nach einer Verbesserung der Lage des Teilraums hinsichtlich der Auflageräume ergibt sich eine neue Lage mit einem verbesserten Bewertungswert. Die Kontur des Teilraums in der neuen Lage weist, wie in Fig. 11B gezeigt, keine Abschnitte mehr in den Räumen auf, die den Schneidarten Einstich und Anfahren mit reduzierter Leistung zugeordnet sind. Es verbleiben nur noch Abschnitte der Kontur in den Räumen, die der Schneidart Schneiden zugeordnet werden (Balken 141C'). Letzteres mag zum Beispiel daher rühren, dass das zu erzeugende Werkstück größer ist als der Abstand zwischen zwei Auflagestegen.

Für die Schneidart Schneiden war es zusätzlich möglich, die kumulierten Konturabschnittslängen zu verbessern. Wie im Balken 141C' ersichtlich wurde zum Beispiel der Anteil der Kontur über den Stegspitzen verringert und der Anteil der Kontur über den Stegflanken vergrößert. Entsprechend ergeben sich günstigere kumulierte Konturabschnittslängen für die vier Gruppen von Räumen, so dass zum einen die Beschädigungsrate reduziert werden konnte und zum anderen die Teilqualität erhöht wurde.

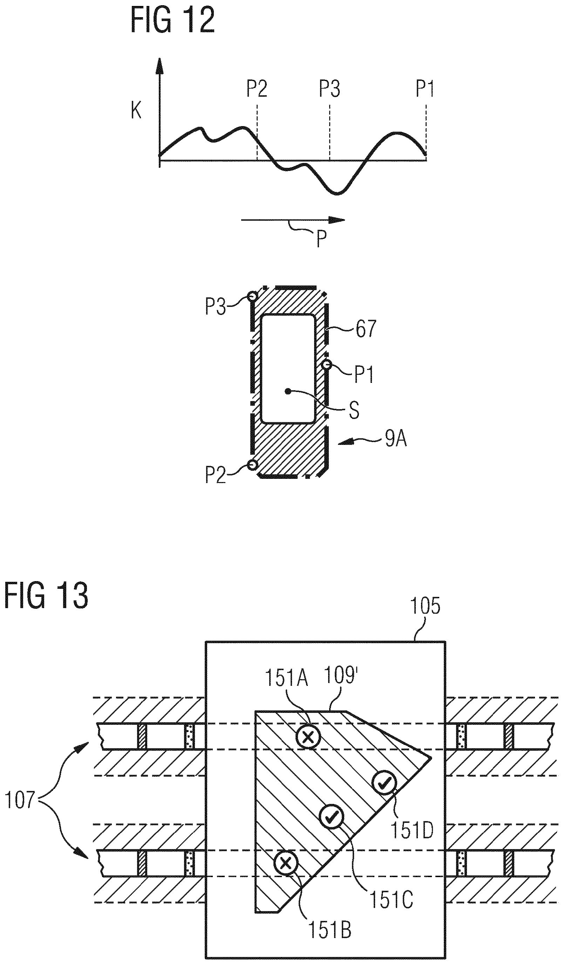

Fig. 12 verdeutlicht eine mechanische Kippanalyse für verschiedene Positionen des Druckpunkts auf einer Kontur 67 eines Teilraums 9A. In eine derartige Kippauswertung werden insbesondere die Positionsdaten der Auflageräume verwendet, um eine Berechnung von Abständen zwischen einem Schwerpunkt des Teilraums und Auflageräumen, die mit dem Teilraum überlappen, durchzuführen.

Beispielhaft ist in Fig. 12 in einem Diagramm ein Verlauf einer Kippwahrscheinlichkeit K über Positionen P des Druckpunkts auf der Kontur 67 des Teilraums 9A aufgetragen, und zwar unter Annahme einer festen Lage des Teilraums 9A bzgl. der Auflageräume. Im Diagramm erkennt man einen ausgedehnten stabilen Bereich (geringe Kippwahrscheinlichkeit), z. B. bei der Position P2, und einen instabilen Bereiche (erhöhte Kippwahrscheinlichkeit) um die Position P3. Die Position 1 kann weder die Eigenschaft "stabil" noch die Eigenschaft "instabil" zugeordnet werden.

Die Kippwahrscheinlichkeit kann als Parameter in die Bestimmung des Bewertungswerts für die zu bewertende Lage des Teilraums einfließen.

In Fig. 13 sind in einem Ausschnitt 105 eines Planungsraums Innenkonturen 151A-151D in einem Teilraum 109' dargestellt. Es wird dabei für verschiedene Positionen von Butzen verdeutlicht, wie der Überlapp der Butzen mit Räumen den Bewertungswert einer zu bewertenden Lage eines Teilraums beeinflussen kann. Denn überlappen Innenkonturen z. B. mit Stegspitzenräumen oder Stegflankenräumen, kann deren Herausfallen beeinträchtigt werden.

Man erkennt, dass die Innenkonturen 151A und 151B (mit eine Kreuzchen als nicht erwünscht gekennzeichnet) bei einer Umsetzung des Schneidplans mit dem Teilraum 109' über Auflagestegen ausgeschnitten würden. Überlappen Innenkonturen allgemein insbesondere mit Auflageräumen oder Auflageüberlappungsräumen, kann deren Herausfallen durch die nahen Lagerungsstrukturen beeinflusst werden.

Im Gegensatz dazu überlappen die Innenkonturen 151C und 151D des Teilraums 109' (als zulässig mit einem Häkchen gekennzeichnet) nicht mit Räumen wie den Stegspitzenräumen, Stegflankenräumen und Stegsenkenräumen; d. h., es befinden sich bei der Umsetzung des Schneidplans keine Lagerungsstrukturen unter den Butzen, da diesen zwischen Auflagestegen ausgeschnitten werden. Die Butzen können so ungestört herausfallen.

Eine derartige Überlappungsauswertung kann für eine Innenkontur durchgeführt werden und in den Bewertungswert für die zu bewertende Lage des Teilraums einfließen. Dabei kann die Überlappungsauswertung die Positionsdaten von Auflageräumen und optional Auflageüberlagerungsräumen verwenden.

## Patentansprüche

1. Verfahren zum Bewerten einer Lage eines Teilraums (9A) eines Schachtelungsplans, wobei der Schachtelungsplan (49A) für eine Ansteuerung eines Schneidprozesses einer Flachbettwerkzeugmaschine (1) zum Ausschneiden von Werkstücken (9) aus einer Materialtafel (7) vorgesehen ist und eine überlappungsfreie Anordnung von den Werkstücken (9) entsprechenden Teilräumen (9A) in einem zweidimensionalen Planungsraum (23) sowie eine Anordnung von vorbestimmten Auflageräumen (27, Sp) und Auflageumgebungsräumen (Fl, Se, N) umfasst, wobei die Auflageräume (27, Sp) Lagerungsoberflächenbereichen der Materialtafel (7) entsprechen, die während des Schneidprozesses gelagert sind, mit den Schritten:
Bereitstellen von
Konturdaten, die eine Schneidkontur angeben, die den Teilraum (9A) in der zu bewertenden Lage im Planungsraum (23) begrenzt,
Positionsdaten, die die Positionen von bei der Bewertung zu berücksichtigenden Räumen im Planungsraum (23) angeben, wobei die Räume eine Gruppe von Auflageräume (27) und eine Gruppe von Auflageumgebungsräume (Fl, Se, N) umfassen, und
Schneidvorgangsdaten, die für mindestens einen Abschnitt der Schneidkontur einen Typ eines Schneidvorgangs angeben,
Ermitteln von kumulierten Konturabschnittslängen unter Verwendung der Positionsdaten, der Konturdaten und der Schneidvorgangsdaten, wobei jede der kumulierten Konturabschnittslängen spezifisch für einen Typ eines Schneidvorgangs und eine Gruppe von Räumen eine kumulierte Länge der Abschnitte der Schneidkontur angibt, die jeweils innerhalb der entsprechenden Gruppe von Räumen liegen,
Berechnen einer Beschädigungsrate für die Schneidkontur in der zu bewertenden Lage durch gewichtetes Kombinieren der Konturabschnittslängen mit Gewichtungsfaktoren (e1, ..., a1, ..., s1, ...), die eine Beschädigungswahrscheinlichkeit in Abhängigkeit von der jeweiligen Gruppe von Räumen und vom jeweiligen Typ des Schneidvorgangs definieren, und
Bestimmen eines Bewertungswerts für die zu bewertende Lage des Teilraums (9A) unter Verwendung der berechneten Beschädigungsrate der Schneidkontur,
Durchführen des Schneidvorgangsbasierend auf dem Schachtelungsplan (49A).

2. Verfahren (39) nach Anspruch 1, wobei
die Flachbettwerkzeugmaschine (1) zur Lagerung der Materialtafel eine Palette (5A) mit einer Mehrzahl von Auflagestegen (101), die jeweils eine Mehrzahl von Stegspitzen (103) aufweisen, aufweist, und
die Auflageumgebungsräume (Fl, Se, N) Auflageüberlagerungsräume, die Bereichen der Materialtafel (7) entsprechen, die während des Schneidprozesses über einem Auflagesteg (101) liegen, und Auflagefreiräume, die Bereichen der Materialtafel (7) entsprechen, die nicht über einem Auflagesteg (101) beim Schneidprozess liegen, umfassen und ferner mit den Schritten:
Untergliedern der Schneidkontur in Abschnitte, die in einem Auflageüberlagerungsraum liegen, und Abschnitte, die in einem Auflagefreiraum liegen,
Ermitteln einer Konturabschnittslänge jeweils für die Auflageüberlagerungsräume und die Auflagefreiräume unter Verwendung der Positionsdaten, der Konturdaten und der Schneidvorgangsdaten, und
Einbeziehen der Konturabschnittslänge für die Auflageüberlagerungsräume und die Auflagefreiräume in die Berechnung der Beschädigungsrate für die Schneidkontur mit entsprechenden Gewichtungsfaktoren (e2, ..., a2, ..., s2, ...).

3. Verfahren nach Anspruch 2, wobei das Bereitstellen der Positionsdaten umfasst:
Erfassen von Positionen von Auflagestegen (101) und/oder von Stegspitzen (103) einer Palette (5A), die zur Verwendung mit der Flachbettwerkzeugmaschine (1) vorgesehen ist und die einen Lagerungsbereich bereitstellt, in dem die Materialtafel (7) gelagert werden kann, wobei
Bereiche über Stegspitzen (103) den Auflageräumen (Sp) zugeordnet werden,
Bereiche über Stegvertiefungen (104) Auflageüberlagerungsräumen zugeordnet werden, wobei die Stegvertiefungen (104) optional weiter untergliederbar sind in Bereiche von Stegspitzenflanken und Stegspitzensenken, denen entsprechend nahe und ferner Auflageüberlagerungsräume zugeordnet werden, und
Randbereiche, die sich seitlich an einen Auflagesteg anschließen und neben einem Auflagesteg (101) entlang der Stegspitze (103) und optional entlang der Stegvertiefung (104) erstrecken, Auflagefreiräumen zugeordnet werden.

4. Verfahren nach Anspruch 2 oder 3, ferner mit
Ablegen einer Materialtafel (7) auf der Palette (5A) und Bestimmen von Lagedaten der Materialtafel (7) bezüglich der Palette (5A), wobei aus einer räumlichen Anordnung der Materialtafel (7) der Planungsraum (23) abgeleitet wird, in dem die Auflageräumen (Sp), Auflageüberlagerungsräume und die Auflagefreiräume definiert sind.

5. Verfahren (39) nach einem der vorhergehenden Ansprüche, wobei den Auflageräumen (Sp) mithilfe der Positionsdaten Abschnitte der Schneidkontur oder Positionen entlang der Schneidkontur den Gruppen von Räumen zugeordnet werden und der Bewertungswert der zu bewertenden Lage des Teilraums (9A) in Abhängigkeit des Ausmaßes der zugeordneten Abschnitte der Schneidkontur oder der Positionen entlang der Schneidkontur, insbesondere in Abhängigkeit von der kumulierten Konturabschnittslänge für den Auflageraum, bestimmt wird.

6. Verfahren (39) nach Anspruch 5, wobei weitere Lagerungsräume im Planungsraum (23) bereitgestellt werden und diesen mithilfe der Positionsdaten Abschnitte der Schneidkontur oder Positionen entlang der Schneidkontur zur Bewertung der zu bewertenden Lage des Teilraums (9A) zugeordnet werden,
kumulierten Konturabschnittslängen für die Lagerungsräume in Abhängigkeit des Ausmaßes der den weiteren Lagerungsräumen zugeordneten Abschnitte der Schneidkontur oder der Positionen entlang der Schneidkontur bestimmt werden und
die kumulierten Konturabschnittslänge der Auflageräume (Sp) und der weiteren Lagerungsräume mit Gewichtungen (e1, ..., a1, ..., s1, ...) kombiniert werden, um den Bewertungswert (143) für die zu bewertende Lage des Teilraums (9A) zu gewinnen.

7. Verfahren nach einem der vorhergehenden Ansprüche, ferner mit
Bereitstellen von den Schneidkonturen zugeordnete Anschnittdaten, die einen Einstechvorgang und optional einen Anfahrvorgang für die Schneidkontur angeben, sowie von Schneidvorgangsdaten für den Einstechvorgang und optional den Anfahrvorgang,
Ermitteln der Einstichanzahl und/oder einer Anfahrabschnittslänge jeweils für die Gruppen von Räumen als entsprechende kumulierte Konturabschnittslängen unter Verwendung der Positionsdaten, der Anschnittdaten und der Schneidvorgangsdaten, und
Einbeziehen der Einstichanzahlen und optional der Anfahrabschnittslänge in die Berechnung der Beschädigungsrate für die Schneidkontur mit entsprechenden Gewichtungsfaktoren.

8. Verfahren nach einem der vorhergehenden Ansprüche, wobei ferner eine Teilequalitätsauswertung durchgeführt wird, die in den Bewertungswert für die zu bewertende Lage des Teilraums (9A) einfließt und die von der Konturabschnittslänge für die Auflageräume (Sp) abhängt.

9. Verfahren nach einem der vorhergehenden Ansprüche, wobei ferner eine Kippauswertung durchgeführt wird, die in den Bewertungswert für die zu bewertende Lage des Teilraums (9A) einfließt und die eine Berechnung von Abständen zwischen einem Schwerpunkt (S) des Teilraums (9A) und Auflageräumen (Sp), die mit dem Teilraum (9A) überlappen, umfasst.

10. Verfahren nach einem der vorhergehenden Ansprüche, wobei der Teilraum (9) eine Außenkontur (31A) und eine geschlossenen Innenkontur (31B) aufweist, die innerhalb der Außenkontur (31A) liegt, und wobei ferner eine Überlappungsauswertung für die Innenkontur (31B) durchgeführt wird, die in den Bewertungswert für die zu bewertende Lage des Teilraums (9A) einfließt und die eine Berechnung einer Überlappung der Innenkontur (31B) mit Auflageräumen (Sp) und optional mit Auflageüberlagerungsräumen umfasst.

11. Verfahren zur Bestimmung eines Schachtelungsplans (49A) von Teilräumen (9A), wobei der Schachtelungsplan (49A) für eine Ansteuerung eines Schneidprozesses einer Flachbettwerkzeugmaschine (1) zum Ausschneiden von Werkstücken (9) aus einer Materialtafel (7) vorgesehen ist und eine überlappungsfreie Anordnung von den Werkstücken (9) entsprechenden Teilräumen (9A) in einem zweidimensionalen Planungsraum (23) sowie eine räumliche Anordnung von vorbestimmten Auflageräumen (Sp) und Auflageumgebungsräumen (Fl, Se, N) umfasst, wobei die Auflageräume (Sp) Lagerungsoberflächenbereichen der Materialtafel (7) entsprechen, die während des Schneidprozesses gelagert sind, und wobei Bewertungswerte für Lagen der Teilräume (9A) im Schachtelungsplan (49A) nach einem Verfahren nach einem der Ansprüche 1 bis 10 berechnet werden.

12. Verfahren zur Bestimmung eines Schachtelungsplans (49A), wobei der Schachtelungsplan (49A) eine überlappungsfreie Anordnung von Teilräumen (9A), die zu fertigenden Werkstücken (9) entsprechen, in einem zweidimensionalen Planungsraum (23) sowie eine räumliche Anordnung von vorbestimmten Auflageräumen (Sp) und Auflageumgebungsräumen (Fl, Se, N) umfasst, und wobei der Schachtelungsplan (49A) für eine Ansteuerung eines Schneidprozesses einer Flachbettwerkzeugmaschine (1) vorgesehen ist, die zur Lagerung einer Materialtafel (7) eine Palette (5A) mit einer Mehrzahl von Auflagestegen (101), die jeweils eine Mehrzahl von Stegspitzen (103) aufweisen, aufweist, und zum Ausschneiden der Werkstücke (9) aus einer Materialtafel (7) ausgebildet ist, mit den Schritten:
Ablegen der Materialtafel (7) auf den Stegspitzen (103) einer Palette (5A) der Flachbettwerkzeugmaschine (1) und Bestimmen von Lagedaten der Materialtafel (7) bezüglich der Palette (5A),
Erfassen von Positionen der Auflagestege (101) und/oder der Stegspitzen (103) bezüglich der Palette (5A) und/oder der Materialtafel (7), um Positionsdaten von bei der Bewertung zu berücksichtigenden Räumen im Planungsraum (23) bereitzustellen, wobei
Bereiche über Stegspitzen (103) Auflageräumen (Sp) zugeordnet werden, die Lagerungsoberflächenbereichen der Materialtafel (7) entsprechen,
Bereiche über Stegvertiefungen (104) Auflageüberlagerungsräumen zugeordnet werden, wobei die Stegvertiefungen (104) optional weiter untergliederbar sind in Bereiche von Stegspitzenflanken und Stegspitzensenken denen nahe und ferner Auflageüberlagerungsräume zugeordnet werden, und
Randbereiche, die sich seitlich an einen Auflagesteg (101) anschließen und neben einem Auflagesteg (101) entlang der Stegspitze (103) und optional entlang der Stegvertiefung (104) erstrecken, Auflagefreiräumen zugeordnet werden,
Bereitstellen von Anordnungsdaten bezüglich der Anordnung des Planungsraums (23) auf der Materialtafel (7), insbesondere dem Koordinatensystem der Materialtafel (7) oder der Palette (5A), und
Bestimmung des Schachtelungsplans (49A) durch Positionieren der Teilräume (9A) in Lagen, die durch Durchführung des Verfahrens gemäß einem der Ansprüche 1 bis 10 bewertet werden.

13. Verfahren nach Anspruch 12, wobei das Positionieren der Teilräume (9A) in Lagen erfolgt, deren Positionen und/oder Ausrichtungen im Planungsraum (23) sich in vorbestimmten Variationsbereichen unterscheiden.

14. Verfahren nach Anspruch 12 oder 13, wobei die Teilräume (9A) in zu bewertende Lagen positioniert werden, indem
Teilräume (9A) im Planungsraum (23) verschoben und/oder gedreht werden,
die Anordnung des Planungsraums (23) auf der Materialtafel (7), insbesondere im dem Koordinatensystem der Materialtafel (7) oder der Palette (5A), variiert wird,
Lagedaten der Materialtafel (7) bezüglich der Palette (5A) variiert werden,
eine Einstichposition eines Einstechvorgangs und/oder eine Anfahrschneidlinie eines Anfahrvorgangs für mindestens einen Teilraum (9A) variiert wird und/oder
Positionen von zwei Teilräumen (9A, 9G) im Planungsraum (23) ausgetauscht werden.

15. Verfahren nach einem der Ansprüche 12 bis 14, wobei das Erfassen der Positionsdaten der Auflagestege (101) und/oder der Stegspitzen (103) erfolgt durch
eine Sensorik der Flachbettwerkzeugmaschine (1), insbesondere einer kapazitiven Abstandssensorik zur Abstandsdetektion zwischen Düse und Materialtafel (7), wobei zumindest eine Untergruppe der Auflagestege (101) und/oder der Stegspitzen (103) erfasst wird und optional die Positionen nichterfasster Auflagestege (101) und/oder Stegspitzen (103) durch Interpolation berechnet werden,
eine optische Sensorik, die auf mindestens einem der folgenden Verfahren basiert: Bildverarbeitungsverfahren basierend auf einer Flächenbildaufnahme, einem Laserlichtschnitt-Verfahren, einem Streifenlichtprojektions-Verfahren, einer Lichtfeldkamera, einer TOF-Kamera, insbesondere zur Tiefenerfassung von Stegvertiefungen (104), der Zustandserfassung der geometrischen Form für eine begleitende Beurteilung von Verschleiß eines Auflagestegs (101) und/oder einer Stegspitze (103), und/oder
einer Ultraschallsensorik, welche Ultraschallsensoren insbesondere an einem Schneidkopf der Flachbettwerkzeugmaschine (1) einsetzt.

16. Verfahren nach einem der Ansprüche 12 bis 15, wobei die Gewichtungsfaktoren (e1, ..., a1, ..., s1, ...) von einem Energieeintragswert abhängen, der bei einem Schneidprozess gemäß dem Schneidplan (49A) in einen Auflagesteg (101) im Bereich der Stegspitzen (103) erfolgt, wobei ein Gewichtungsfaktor für einen Schneidvorgang in einem Raum über einer Stegspitze (103) maximal ist und geringere Gewichtungsfaktoren jeweils für einen Schneidvorgang über einer Stegspitzenflanke, für einen Schneidvorgang über einer Stegspitzensenke und für einen Schneidvorgang im Randbereich vorgesehen sind.

17. Fertigungsverfahren zum Ausschneiden von Werkstücken (9) mit einer Flachbettwerkzeugmaschine (1) gemäß werkstückspezifischen Schneidkonturen aus einer Materialtafel (7), umfassend
Durchführen eines Verfahrens nach einem der Ansprüche 12 bis 16 in Echtzeit während des Betriebs der Flachbettwerkzeugmaschine (1), wobei die Berechnungen zur Bestimmung des verbesserten Schachtelungsplans (21) von einem lokalen und/oder Cloud-basierten Fertigungssteuerungssystem durchgeführt wird, und
Durchführen des Schneidvorgangs basierend auf dem verbesserten Schachtelungsplan (21).

18. Fertigungssystem mit
einer Flachbettwerkzeugmaschine (1) zum Ausschneiden von Werkstücken (9) gemäß werkstückspezifischen Schneidkonturen aus einer Materialtafel (7) und
einem lokalen und/oder Cloud-basierten Fertigungssteuerungssystem zum Durchführen eines Verfahrens nach einem der Ansprüche 12 bis 16 in Echtzeit während des Betriebs der Flachbettwerkzeugmaschine (1), um dieser einen hinsichtlich eines Schneidprozesses der Flachbettwerkzeugmaschine (1) verbesserten Schachtelungsplan (21) bereitzustellen.

## Claims

1. A method for determining a position of a sub-space (9A) of a nesting plan, wherein the nesting plan (49A) is provided for controlling a cutting process of a flatbed machine tool (1) for cutting out workpieces (9) from a material panel (7) and comprises a non-overlapping arrangement of sub-spaces (9A) which correspond to the workpieces (9) in a two-dimensional planning space (23), as well as an arrangement of predetermined support spaces (27, Sp) and support surrounding spaces (FI, Se, N), wherein the support spaces (27, Sp) correspond to bearing surface regions of the material panel (7) which are supported during the cutting process, the method having the steps of:
providing
contour data which indicate a cutting contour that delimits the sub-space (9A) in the position in the planning space (23) to be evaluated,
position data that indicate the positions of spaces in the planning space (23) which are to be taken into account in the evaluation, wherein said spaces encompass a group of support spaces (27) and a group of support surrounding spaces (FI, Se, N), and
cutting procedure data which indicate a type of cutting procedure for at least one section of the cutting contour,
ascertaining cumulative contour section lengths using the position data, the contour data and the cutting procedure data, wherein each of the cumulative contour section lengths indicates, specific to a type of cutting procedure and a group of spaces, a cumulative length of sections of the cutting contour, each of which lying within the corresponding group of spaces,
by combining the contour section lengths in a weighted manner using weighting factors (e1, ..., a1, ..., s1, ...) which define a damage probability on the basis of the respective group of spaces and the respective type of cutting procedure, calculating a damage rate for the cutting contour in the position to be evaluated, and
using the calculated damage rate of the cutting contour, determining an evaluation value for the position of the sub-space (9A) to be evaluated,
carrying out the cutting procedure based on the nesting plan (49A).

2. The method (39) according to claim 1, wherein
the flatbed machine tool (1) includes a pallet (5A) for supporting the material panel, the pallet having a plurality of support bars (101), each having a plurality of bar tips (103), and
the support surrounding spaces (FI, Se, N) comprise support overlay spaces which correspond to regions of the material panel (7) that lie above a support bar (101) during the cutting process, and support clearance spaces which correspond to regions of the material panel (7) that do not lie above a support bar (101) during the cutting process, and the method having the further steps of:
subdividing the cutting contour into sections that lie within a support overlay space and sections that lie within a support clearance space,
ascertaining a contour section length for each of the support overlay spaces and the support clearance spaces using the position data, the contour data, and the cutting operation data, and
incorporating the contour section length for the support overlay spaces and the support clearance spaces into the calculation of the damage rate for the cutting contour, including corresponding weighting factors (e2, ..., a2, ..., s2, ...).

3. The method according to claim 2, wherein the providing of the position data comprises:
acquiring positions of support bars (101) and/or of bar tips (103) of a pallet (5A) which is provided for use with the flatbed machine tool (1) and which provides a bearing region in which the material panel (7) can be supported, wherein
regions above bar tips (103) are assigned to the support spaces (Sp),
regions above bar depressions (104) are assigned to support overlay spaces, wherein the bar depressions (104) can optionally be further subdivided into regions of bar tip flanks and bar tip sinks to which corresponding near and far support overlay spaces are assigned, and
edge regions laterally adjoining a support bar and extending along the bar tip (103), and optionally along the bar depression (104), next to a support bar (101) are assigned to support clearance spaces.

4. The method according to claim 2 or 3, further comprising
depositing a material panel (7) on the pallet (5A) and determining position data of the material panel (7) relative to the pallet (5A), wherein the planning space (23), inside of which the support spaces (Sp), support overlay spaces and the support clearance spaces are defined, is derived from a spatial arrangement of the material panel (7).

5. The method (39) according to one of the preceding claims, wherein to the support spaces (Sp) using the position data, sections of the cutting contour or positions along the cutting contour are assigned to the groups of spaces, and the evaluation value of the position of the sub-space (9A) to be evaluated is determined on the basis of the extent of the assigned sections of the cutting contour or the positions along the cutting contour, in particular on the basis of the cumulative contour section length for the support space.

6. The method (39) according to claim 5, wherein further bearing spaces are provided in the planning space (23) and sections of the cutting contour or positions along the cutting contour are assigned to said further bearing spaces in order to evaluate the position of the sub-space (9A) to be evaluated,
cumulative contour section lengths are determined for the bearing spaces on the basis of the extent of the sections of the cutting contour, or the positions along the cutting contour, that are assigned to the further bearing spaces, and
the cumulative contour section lengths of the support spaces (Sp) and of the further bearing spaces are combined, including weightings (e1, ..., a1, ..., s1, ...), in order to obtain the evaluation value (143) for the position of the sub-space (9A) to be evaluated.

7. The method according to one of the preceding claims, further comprising
providing incision data assigned to the cutting contours, the data indicating a piercing procedure and optionally an approach procedure for the cutting contour, as well as cutting procedure data for the piercing procedure and optionally the approach procedure,
using the position data, the incision data and the cutting procedure data, ascertaining the number of piercings and/or an approach section length for each of the groups of spaces as corresponding cumulative contour section lengths, and
incorporating the numbers of piercings and optionally the approach section length into the calculation of the damage rate for the cutting contour, including the corresponding weighting factors.

8. The method according to one of the preceding claims, wherein a part quality evaluation is carried out, said evaluation being included in the evaluation value for the position of the sub-space (9A) to be evaluated, said evaluation also being a function of the contour section length for the support spaces (Sp).

9. The method according to one of the previous claims, wherein a tilt evaluation is also carried out, said evaluation being included in the evaluation value for the position of the sub-space (9A) to be evaluated and involving a calculation of distances between a center of gravity (S) of the sub-space (9A) and support spaces (Sp) that overlap with the sub-space (9A).

10. The method according to one of the preceding claims, wherein the sub-space (9) has an outer contour (31A) and a closed inner contour (31B) which lies inside of the outer contour (31A), and wherein an overlap evaluation is also carried out for the inner contour (31B), said evaluation being included in the evaluation value for the position of the sub-space (9A) to be evaluated and involving a calculation of an overlap of the inner contour (31B) with the support spaces (Sp) and optionally with the support overlay spaces.

11. The method for determining a nesting plan (49A) of sub-spaces (9A), wherein the nesting plan (49A) is provided for controlling a cutting process of a flatbed machine tool (1) for cutting out workpieces (9) from a material panel (7) and comprises a non-overlapping arrangement of sub-spaces (9A) which correspond to the workpieces (9) in a two-dimensional planning space (23) as well as a spatial arrangement of predetermined support spaces (Sp) and support surrounding spaces (FI, Se, N), wherein the support spaces (Sp) correspond to bearing surface regions of the material panel (7) which are supported during the cutting process, and wherein evaluation values for positions of the sub-spaces (9A) in the nesting plan (49A) are calculated according to a method according to claims 1 to 10.

12. The method for determining a nesting plan (49A), wherein the nesting plan (49A) comprises a non-overlapping arrangement of sub-spaces (9A) in a two-dimensional planning space (23), said sub-spaces corresponding to workpieces (9) to be produced, as well as a spatial arrangement of predetermined support spaces (Sp) and support surrounding spaces (FI, Se, N), and wherein the nesting plan (49A) is provided for controlling a cutting process of a flatbed machine tool (1) which includes a pallet (5A) and which, in order to support a material panel (7), is designed with a plurality of support bars (101), each of which has a plurality of bar tips (103), and for cutting out the workpieces (9) from a material panel (7), the method comprising the steps of:
depositing the material panel (7) on the bar tips (103) of a pallet (5A) of the flatbed machine tool (1) and determining position data of the material panel (7) relative to the pallet (5A),
acquiring positions of the support bars (101) and/or the bar tips (103) relative to the pallet (5A) and/or the material panel (7) in order to provide position data of spaces in the planning space (23) to be taken into account in the evaluation, wherein
regions above the bar tips (103) are assigned to support spaces (Sp) which correspond to bearing surface regions of the material panel (7),
regions above bar depressions (104) are assigned to support overlay spaces, wherein the bar depressions (104) are optionally further subdivided into regions of bar tip flanks and bar tip sinks to which near and far support overlay spaces are assigned, and
regions laterally adjoining a support bar (101) and extending next to a support bar (101) along the bar tip (103) and optionally along the bar depression (104) are assigned to support clearance spaces,
providing arrangement data regarding the arrangement of the planning space (23) on the material panel (7), in particular regarding the coordinate system of the material panel (7) or the pallet (5A), and
determining the nesting plan (49A) by positioning the sub-spaces (9A) in positions which are evaluated by carrying out the method according to one of claims 1 to 10.

13. The method according to claim 12, wherein the sub-spaces (9A) are positioned in positions which, in the planning space (23), differ in predetermined variation ranges positionally and with regard to orientation.

14. The method according to claim 12 or 13, wherein the sub-spaces (9A) are positioned in positions to be evaluated in that
sub-spaces (9A) are displaced and/or rotated in the planning space (23),
the arrangement of the planning space (23) on the material panel (7), in particular in the coordinate system of the material panel (7) or the pallet (5A), is varied,
position data of the material panel (7) relative to the pallet (5A) are varied,
a piercing position of a piercing procedure and/or an approach cutting line of an approach procedure is varied for at least one sub-space (9A) and/or
positions of two sub-spaces (9A, 9G) in the planning space (23) are exchanged.

15. The method according to one of claims 12 to 14, wherein the acquiring of the position data of the support bars (101) and/or of the bar tips (103) is performed by
a sensor system of the flatbed machine tool (1), in particular of a capacitive distance sensor system for detecting the distance between nozzle and material panel (7), wherein at least one sub-group of the support bars (101) and/or of the bar tips (103) is detected and optionally the positions of non-detected support bars (101) and/or bar tips (103) are calculated through interpolation,
an optical sensor system based on at least one of the following methods: image processing method based on a surface image recording, a laser light section method, a strip light projection method, a light field camera, and a time-of-flight TOF camera, in particular for depth acquisition of bar depressions (104), the state acquisition of the geometrical shape for an accompanying assessment of wear of a support bar (101) and/or of a bar tip (103), and/or
an ultrasound sensor system which uses ultrasound sensors, in particular at a cutting head of the flatbed machine tool (1).

16. The method according to one of claims 12 to 15, wherein the weighting factors (e1, ..., a1, ..., s1, ...) depend on an energy input value that occurs in a cutting process according to the cutting plan (49A) in a support bar (101) in the region of the bar tips (103), wherein a weighting factor for a cutting process in a space above a bar tip (103) is maximum and lower weighting factors are provided, respectively, for a cutting process above a bar tip flank, for a cutting process above a bar tip sink, and for a cutting process in the edge region.

17. A production method for cutting workpieces (9) out of a material panel (7) using a flatbed machine tool (1) according to workpiece-specific cutting contours, the method comprising
carrying out a method according to one of claims 12 to 16 in real time during the operation of the flatbed machine tool (1), wherein the calculations for determining the improved nesting plan (21) is carried out by a local and/or cloud-based production control system, and
carrying out the cutting procedure based on the improved nesting plan (21).

18. A production system, comprising
a flatbed machine tool (1) for cutting workpieces (9) out of a material panel (7) according to workpiece-specific cutting contours, and
a local and/or cloud-based production control system for carrying out a method according to one of claims 12 to 16 in real time during the operation of the flatbed machine tool (1) in order to provide the machine tool with an improved nesting plan (21) with respect to a cutting process of the flatbed machine tool (1).

## Revendications

1. Procédure d'évaluation de l'emplacement d'un espace partiel (9A) d'un plan de d'imbrication, le plan d'imbrication (49A) étant prévu pour commander un procédé de découpe d'une machine-outil à banc plat (1) pour la découpe de pièces (9) à partir d'une feuille de matériau (7), et comprenant un agencement sans chevauchement d'espaces partiels (9A) correspondant aux pièces (9) dans un espace de planification (23) bidimensionnel, ainsi qu'un agencement d'espaces d'appui prédéterminés (27, Sp) et d'espaces d'environnement d'appui (FI, Se, N), les espaces d'appui (27, Sp) correspondant à des zones de surfaces de support de la feuille de matériau (7), qui sont soutenues pendant le procédé de découpe, incluant les étapes :
mise à disposition de
données de contour indiquant un contour de découpe, qui délimite l'espace partiel (9A) dans l'emplacement à évaluer dans l'espace de planification (23),
données de position indiquant les positions des espaces à considérer lors de l'évaluation dans l'espace de planification (23), les espaces comprenant un groupe d'espaces d'appui (27) et un groupe d'espaces d'environnement d'appui (FI, Se, N), et
données de processus de découpe indiquant pour au moins une section du contour de découpe un type de processus de découpe,
détermination des longueurs cumulées de section de contour en utilisant les données de position, les données de contour et les données de processus de découpe, chacune des longueurs cumulées de section de contour indiquant spécifiquement pour un type de processus de découpe et un groupe d'espaces, une longueur cumulée des sections du contour de découpe, se trouvant respectivement à l'intérieur du groupe d'espaces correspondant,
calcul d'un taux de dégradation pour le contour de découpe dans l'emplacement à évaluer en combinant de manière pondérée les longueurs de section de contour avec des facteurs de pondération (e1, ..., a1, ..., s1, ...) définissant une probabilité de dégradation en fonction du groupe d'espaces correspondant et du type de processus de découpe correspondant, et
détermination d'une valeur d'évaluation pour l'emplacement à évaluer de l'espace partiel (9A) en utilisant le taux de dégradation calculé du contour de découpe,
exécution du processus de découpe basé sur le plan d'imbrication (49A).

2. Procédure (39) selon la revendication 1, dans laquelle
la machine-outil à banc plat (1) comporte, pour le support de la feuille de matériau, une palette (5A) avec une pluralité de traverses d'appui (101), qui comportent chacune une pluralité de pointes de traverse (103), et
les espaces d'environnement d'appui (FI, Se, N) comprennent des espaces de chevauchement d'appui correspondant à des zones de la feuille de matériau (7), qui se trouvent au-dessus d'une traverse d'appui (101) pendant le procédé de découpe, ainsi que des espaces libres d'appui correspondant à des zones de la feuille de matériau (7) qui ne se trouvent pas au-dessus d'une traverse d'appui (101) lors du procédé de découpe, et incluant en outre les étapes :
sous-division du contour de découpe en sections qui se trouvent dans un espace de chevauchement d'appui et en sections qui se trouvent dans un espace libre d'appui,
détermination d'une longueur de section de contour respectivement pour les espaces de chevauchement d'appui et des espaces libres d'appui en utilisant les données de position, les données de contour et les données de processus de découpe, et
intégration de la longueur de section de contour pour les espaces de chevauchement d'appui et les espaces libres d'appui dans le calcul du taux de dégradation pour le contour de découpe avec des facteurs de pondération correspondants (e2, ..., a2, ..., s2, ...).

3. Procédure selon la revendication 2, dans lequel la mise à disposition des données de position comprend :
la détection des positions des traverses d'appui (101) et/ou des pointes de traverse (103) d'une palette (5A), prévue pour être utilisée avec la machine-outil à banc plat (1) et mettant à disposition une zone de support où la feuille de matériau (7) peut être soutenue, dans laquelle
les zones au-dessus des pointes de traverse (103) sont associées aux espaces d'appui (Sp),
les zones au-dessus de dépressions de traverse (104) sont associées à des espaces de chevauchement d'appui, les dépressions de traverse (104) étant éventuellement encore subdivisibles en zones de flancs de pointes de traverse et creux de pointes de traverse, auxquels sont associés en conséquence des espaces de chevauchement d'appui proches et éloignés, et
les zones de bord, qui se raccordent latéralement à une traverse d'appui et s'étendent à côté d'une traverse d'appui (101) le long de la pointe de traverse (103) et éventuellement le long de la dépression de traverse (104), sont associées à des espaces libres d'appui.

4. Procédure selon la revendication 2 ou 3, avec en outre
le placement d'une feuille de matériau (7) sur la palette (5A) et la détermination de données d'emplacement de la feuille de matériau (7) par rapport à la palette (5A), dans laquelle l'espace de planification (23) est dérivé d'un agencement spatial de la feuille de matériau (7), où les espaces d'appui (Sp), les espaces de chevauchement d'appui et les espaces libres d'appui sont définis.

5. Procédure (39) selon l'une des revendications précédentes, dans laquelle aux espaces d'appui (Sp), à l'aide des données de position, des sections du contour de découpe ou des positions le long du contour de découpe sont associés aux groupes d'espaces et la valeur d'évaluation de l'emplacement à évaluer de l'espace partiel (9A) est déterminée en fonction de l'étendue des sections du contour de découpe associées ou des positions le long du contour de découpe, notamment en fonction de la longueur cumulée de section de contour pour l'espace d'appui.

6. Procédure (39) selon la revendication 5, dans laquelle d'autres espaces de support sont mis à disposition dans l'espace de planification (23) et, à l'aide des données de position, des sections du contour de découpe ou des positions le long du contour de découpe leur sont associées pour l'évaluation de l'emplacement à évaluer de l'espace partiel (9A),
des longueurs cumulées de sections de contour pour les espaces de support sont déterminées en fonction de l'étendue des sections du contour de découpe associées aux autres espaces de support ou des positions le long du contour de découpe et
les longueurs cumulées de sections de contour des espaces d'appui (Sp) et des autres espaces de support sont combinées avec des pondérations (e1, ..., a1, ..., s1, ...) pour obtenir la valeur d'évaluation (143) pour l'emplacement à évaluer de l'espace partiel (9A).

7. Procédure selon l'une des revendications précédentes, avec en outre
la mise à disposition de données d'incision associées aux contours de découpe, indiquant un processus d'insertion et éventuellement un processus d'approche pour le contour de découpe, ainsi que des données de processus de découpe pour le processus d'insertion et éventuellement le processus d'approche,
la détermination du nombre d'entrée et/ou d'une longueur de section d'approche respectivement pour les groupes d'espaces en tant que longueurs cumulées de section de contour correspondantes, en utilisant les données de position, les données d'incision et les données de processus de découpe, et
l'inclusion des nombres d'entrée et éventuellement de la longueur de section d'approche dans le calcul du taux de dégradation pour le contour de découpe avec des facteurs de pondération correspondants.

8. Procédure selon l'une des revendications précédentes, dans laquelle une évaluation de la qualité des composants est en outre réalisée, laquelle influe sur la valeur d'évaluation de l'emplacement à évaluer de l'espace partiel (9A) et dépend de la longueur de section de contour pour les espaces d'appui (Sp).

9. Procédure selon l'une des revendications précédentes, dans laquelle une évaluation de l'inclinaison est en outre réalisée, laquelle influe sur la valeur d'évaluation de l'emplacement à évaluer de l'espace partiel (9A) et comprend un calcul de distances entre un centre de gravité (S) de l'espace partiel (9A) et des espaces d'appui (Sp) qui se chevauchent avec l'espace partiel (9A).

10. Procédure selon l'une des revendications précédentes, dans laquelle l'espace partiel (9) comporte un contour extérieur (31A) et un contour intérieur (31B) fermé qui se trouve à l'intérieur du contour extérieur (31A), et dans laquelle une évaluation de chevauchement pour le contour intérieur (31B) est en outre réalisée, laquelle influe sur la valeur d'évaluation de l'emplacement à évaluer de l'espace partiel (9A) et comprend un calcul d'un chevauchement du contour intérieur (31B) avec des espaces d'appui (Sp) et éventuellement avec des espaces de chevauchement d'appui.

11. Procédure de détermination d'un plan d'imbrication (49A) d'espaces partiels (9A), dans laquelle le plan d'imbrication (49A) est prévu pour commander un procédé de découpe d'une machine-outil à banc plat (1) pour la découpe de pièces (9) à partir d'une feuille de matériau (7), et comprenant un agencement sans chevauchement d'espaces partiels (9A) correspondant aux pièces (9) dans un espace de planification (23) bidimensionnelle, ainsi qu'un agencement spatial d'espaces d'appui prédéterminés (Sp) et d'espaces d'environnement d'appui (FI, Se, N), les espaces d'appui (Sp) correspondant aux zones de surfaces de support de la feuille de matériau (7), qui sont soutenues pendant le procédé de découpe, des valeurs d'évaluation pour des emplacements des espaces partiel (9A) dans le plan imbrication (49A) étant calculées conformément à une procédure selon l'une des revendications 1 à 10.

12. Procédure de détermination d'un plan d'imbrication (49A), le plan d'imbrication (49A) comprenant un agencement sans chevauchement d'espaces partiels (9A), correspondant à des pièces à fabriquer (9), dans un espace de planification bidimensionnel (23) ainsi qu'un agencement spatial d'espaces d'appui (Sp) et d'espaces d'environnement d'appui (FI, Se, N) prédéterminés, et dans laquelle le plan d'imbrication (49A) est prévu pour commander un procédé de découpe d'une machine-outil à banc plat (1) qui comporte, pour le support d'une feuille de matériau (7), une palette (5A) avec une pluralité de traverses d'appui (101), chacune comportant une pluralité de pointes de traverse (103), et qui est conçue pour découper les pièces (9) à partir d'une feuille de matériau (7), incluant les étapes :
placement de la feuille de matériau (7) sur les pointes de traverse (103) d'une palette (5A) de la machine-outil à banc plat (1) et détermination des données de position de la feuille de matériau (7) par rapport à la palette (5A),
détection des positions des traverses d'appui (101) et/ou des pointes de traverse (103) par rapport à la palette (5A) et/ou à la feuille de matériau (7), afin de mettre à disposition des données de position des espaces à considérer lors de l'évaluation dans l'espace de planification (23), dans laquelle
les zones au-dessus des pointes de traverse (103) sont associées à des espaces d'appui (Sp) qui correspondent aux zones de surfaces de support de la feuille de matériau (7),
les zones au-dessus des dépressions de traverse (104) sont associées aux espaces de chevauchement d'appui, les dépressions de traverse (104) étant éventuellement subdivisibles en zones de flancs de pointes de traverse et de creux de pointes de traverse, auxquelles sont associés respectivement des espaces de chevauchement d'appui proches et éloignés, et
les zones de bord, qui se raccordent latéralement à une traverse d'appui (101) et s'étendent à côté d'une traverse d'appui (101) le long de la pointe de traverse (103) et éventuellement le long d'une dépression de traverse (104), sont associées à des espaces libres d'appui,
mise à disposition de données d'agencement concernant l'agencement de l'espace de planification (23) sur la feuille de matériau (7), notamment le système de coordonnées de la feuille de matériau (7) ou de la palette (5A), et
détermination du plan d'imbrication (49A) en positionnant les espaces partiels (9A) dans des emplacements évalués lors de l'exécution de la procédure selon l'une des revendications 1 à 10.

13. Procédure selon la revendication 12, dans laquelle le positionnement des espaces partiels (9A) se fait dans des emplacements, dont les positions et/ou des orientations dans l'espace de planification (23) varient selon des zones de variation prédéterminées.

14. Procédure selon la revendication 12 ou 13, dans laquelle les espaces partiels (9A) sont positionnés dans des emplacements à évaluer en
déplaçant et/ou en tournant les espaces partiels (9A) dans l'espace de planification (23),
faisant varier l'agencement de l'espace de planification (23) sur la feuille de matériau (7), notamment dans le système de coordonnées de la feuille de matériau (7) ou de la palette (5A),
faisant varier les données d'emplacement de la feuille de matériau (7) par rapport à la palette (5A),
faisant varier une position d'entrée d'un processus d'insertion et/ou une ligne de coupe d'approche d'un processus d'approche pour au moins un espace partiel (9A), et/ou
échangeant les positions de deux espaces partiels (9A, 9G) dans l'espace de planification (23).

15. Procédure selon l'une des revendications 12 à 14, dans laquelle la détection des données de position des traverses d'appui (101) et/ou des pointes de traverse (103) se fait par
un système de capteur de la machine-outil à banc plat (1), notamment un système de capteur de distance capacitif pour la détection de distance entre la buse et la feuille de matériau (7), dans lequel au moins un sous-ensemble des traverses d'appui (101) et/ou des pointes de traverse (103) est détecté et les positions des traverses d'appui (101) et/ou des pointes de traverse (103) non détectées sont éventuellement calculées par interpolation,
un système de capteur optique basé au moins sur une des procédures suivantes : procédure de traitement d'image basée sur une capture d'image de surface, une procédure de coupe par faisceau laser, une procédure de projection de lumière à bande, une caméra à champ lumineux, une caméra TOF, notamment pour la détection de profondeur de dépressions de traverse (104), la détection de l'état de la forme géométrique pour une évaluation concomitante de l'usure d'une traverse d'appui (101) et/ou d'une pointe de traverse (103), et/ou
un système de capteur à ultrasons utilisant des capteurs à ultrasons, notamment montés sur une tête de découpe de la machine-outil à banc plat (1).

16. Procédure selon l'une des revendications 12 à 15, dans laquelle les facteurs de pondération (e1, ..., a1, ..., s1, ...) dépendent d'une valeur d'apport d'énergie qui se fait dans une traverse d'appui (101) dans la zone des pointes de traverse (103) lors d'un procédé de découpe selon le plan de découpe (49A), dans laquelle un facteur de pondération pour un processus de découpe dans un espace au-dessus d'une pointe de traverse (103) est maximal et des facteurs de pondération moindres sont prévus respectivement pour un processus de découpe au-dessus d'un flanc de pointe de traverse, pour un processus de découpe au-dessus d'un creux de pointe de traverse et pour un processus de découpe au niveau de la zone de bord.

17. Procédure de fabrication pour la découpe de pièces (9) avec une machine-outil à banc plat (1) selon des contours de découpe spécifiques aux pièces à partir d'une feuille de matériau (7), comprenant
l'exécution d'une procédure selon l'une des revendications 12 à 16 en temps réel pendant le fonctionnement de la machine-outil à banc plat (1), dans laquelle les calculs pour la détermination du plan d'imbrication amélioré (21) sont exécutés par un système de commande de fabrication local et/ou basé sur le cloud, et
l'exécution du processus de découpe basé sur le plan d'imbrication amélioré (21).

18. Système de fabrication avec
une machine-outil à banc plat (1) pour la découpe de pièces (9) selon des contours de découpe spécifiques aux pièces à partir d'une feuille de matériau (7), et
un système de commande de fabrication local et/ou basé sur le cloud pour exécuter une procédure selon l'une des revendications 12 à 16 en temps réel pendant le fonctionnement de la machine-outil à banc plat (1), afin de mettre à disposition de celle-ci un plan d'imbrication amélioré (21) quant à un procédé de découpe de la machine-outil à banc plat (1).
